# EUROPEAN PATENT SPECIFICATION

(11) **EP 2 836 310 B1**
(45) Date of publication and mention of the grant of the patent: **19.08.2020**
(21) Application number: 13720106.7
(22) Date of filing: 11.04.2013
(51) Int. Cl.: B01F 5/00, B01F 5/20, B05B 7/14, B01F 3/04, B01F 3/12, B29B 7/90, B01F 5/04, B29B 7/74, B05B 7/04, B05B 7/26, B29B 7/76, B05B 7/00

(54) **DEVICE PROVIDED WITH A FLOW RESISTING CHECK VALVE AND METHOD FOR APPLYING A COATING TO A SURFACE**
VORRICHTUNG MIT EINEM STRÖMUNGSBESTÄNDIGEN RÜCKSCHLAGVENTIL UND VERFAHREN ZUM AUFBRINGEN EINER BESCHICHTUNG AUF EINER OBERFLÄCHE
DISPOSITIF POURVU D'UN CLAPET DE NON-RETOUR RÉSISTANT À UN ÉCOULEMENT ET PROCÉDÉ PERMETTANT D'APPLIQUER UN REVÊTEMENT SUR UNE SURFACE

(30) Priority: 11.04.2012 NL 2008628; 11.04.2012 NL 2008627; 11.04.2012 NL 2008629
(43) Date of publication of application: 18.02.2015
(73) Proprietor: FASD. BW Beheer B.V., 6971 BC Brummen (NL)
(72) Inventor: VAN DER WOUDE, Dirk Cornelis, 6971 BC Brummen (NL); ENSING, Hendrik, 6971 HR Brummen (NL)
(74) Representative: Algemeen Octrooi- en Merkenbureau B.V.
(86) International application number: PCT/NL2013/050265
(87) International publication number: WO 2013/154430

(56) References cited:
- WO-A1-2010/028989
- WO-A1-2011/061328
- CH-A- 505 173
- DE-A1- 2 017 548
- DE-A1-102007 037 492
- US-A- 4 421 788
- US-A1- 2006 131 333

## Description

The present invention generally relates to a supply device and a spraying device by means of which, in use, a coating layer is applied to a surface.

The present invention further relates to a method for applying a coating layer to a surface.

The present invention, according to one aspect thereof, relates to a supply device designed for supplying a fluid to a mixing chamber of, for example, a foaming device by means of which, in use, a foam is made, for example a spraying device by means of which, in use, a layer of coating material is applied to a surface.

A known supply line is incorporated in such a spraying device provided with a connection which, in use, is connected to a store of pre-mixed binder solution. From said connection, a supply line extends to a mixing chamber. The connection or the supply line is provided with a cock, by means of which the communication with the store of binder solution can be controlled by an operator, that is, the cock can be (partially) opened or closed. A binder or a foaming agent is a solution that is to be processed into a foam. In a very simple embodiment it may be water. Frequently an adhesive or another binding material will have been added to water or another liquid functioning as a binder. The known spraying device is further provided with comparable means for the supply of a gas, usually air. When the spraying device is to be activated, an operator will activate pumps for applying a pressure and open the cocks in the respective supply lines. Under the influence of the respective pressures being applied, the materials in question are driven to the mixing chamber, where the materials are mixed into a foamy substance. At the end of the spraying process, an operator will turn off the pumps and close the cocks. A drawback of the known devices is that the quality of the mixture from the mixing chamber is not sufficiently stable. The term "stable foam" as used herein is understood to mean a foam whose firmness and uniformity at a given point in the process will change relatively little during the operation of the spraying device. The quality of the foam is sensitive to material and resistance fluctuations and may therefore be insufficient for being able to apply a uniform coating layer by means of a spraying device. When known devices are used, such situations are anticipated by using more material of the components of the foam, which adds to the cost and leads to a longer drying time due to the use of an unnecessarily large amount of solvent.

International patent application WO2010/028989 discloses a foam dispensing assembly comprising a dispensing head and a manifold assembly. The manifold assembly includes a purge portion for supplying a gas and a cleansing fluid to the dispensing head, a first supply portion for supplying a first fluid to the dispensing head and a second supply portion for supplying a second fluid to the dispensing head. Each of the purge portion, the first supply portion and the second supply portion include a plurality of check valves and flow control valves for controlling the flow of the first fluid, the second fluid, the gas and the cleansing fluid through the manifold assembly. Each of the first supply portion and the second supply portion include an integral flow control device for regulating a fluid flow rate to the dispensing head.

Accordingly it is an object of the present invention to provide a supply device designed for supplying a fluid to a mixing chamber of, for example, a foaming device by means of which, in use, a foam is made, for example a spraying device by means of which, in use, a layer of coating material is applied to a surface, by means of which a firm and uniform mixture, for example a foam, can be provided in a simpler and/or quicker manner. According to the present invention, this is achieved by providing a supply device according to claim 1. The supply channel provided with the flow resistor is mentioned in combination with a specific use for applying a layer of coating material, to be true, but it has a wider range of applications, viz. in various foaming devices in which foam is generated. The term "supply channel" is to be given a broad interpretation; in this document it is not limited to a pipe or a hose, for example, but it may comprise the entire supply route from a store of base material to the mixing chamberaccording to the invention, a flow resistor may thus be provided downstream or upstream of a supply hose or pipe. The threshold value for the pressure difference between the binder solution supply line as the first supply channel and the mixing chamber is at least 10 kPa, preferably at least 20 kPa or at least 30 kPa, that is, the flow device for the binder solution supply is designed to shut off the supply of binder solution to the mixing chamber when the difference of pressure at both sides of the flow resistor is less than 10 kPa, more preferably at least 20 kPa or at least 30 kPa, higher than the pressure in the mixing chamber and to open when the pressure difference between the side of the gas store and the mixing chamber of the flow resistor exceeds the threshold value. The flow resistor will thus shut off the supply of binder solution when the pressure of the binder solution supply does not have the value needed to obtain a required quality of a foam to be provided. The flow resistor thus prevents the flow to the mixing chamber of an amount of binder solution that is not sufficient for obtaining a desired foam quality. Possibly, the flow resistor will only close at a value lower than the threshold value in this case as well, for example when an additional resistance must be overcome for opening the flow resistor in comparison with the resistance for keeping the flow resistor open.

The threshold value for the pressure difference between the gas supply line and the mixing chamber is at least 10 kPa, preferably at least 20 kPa or at least 30 kPa, that is, the flow device for the gas supply is designed to shut off the supply of gas to the mixing chamber when the difference of pressure at both sides of the flow resistor is less than 10 kPa, more preferably at least 20 kPA or at least 30 kPa, higher than the pressure in the mixing chamber and and to open when the pressure difference between the side of the gas store and the second flow resistor exceeds the threshold value. The second flow resistor will thus shut off the supply of gas when the gas supply pressure does not have the value needed to obtain a required quality of a foam to be provided. The second flow resistor thus prevents the flow to the mixing chamber of an amount of gas that is not sufficient for obtaining a desired foam quality. Possibly, the second flow resistor will only close at a value lower than the threshold value in this case as well.

The invention achieves that a desired foam quality is quickly obtained already during the initial stage of the process, which reduces loss of material upon activation and deactivation. The flow resistors prevent a flow through the supply channel of the fluid in question to the mixing chamber when the pressure is too low, for example a spontaneous flow when no pressure is being built up for such a supply channel. Another advantage of the flow resistors is that it has a dampening effect on fluctuations in the fluid flow in question, i.e. when the specific threshold value of the pressure has been exceeded and the flow resistor releases the supply of base material to the mixing chamber and the second flow resistor releases the supply of gas to the mixing chamber. Preferably, the flow resistors are designed so that it will also have a damping effect on (varying) pressure differences between the supply channel in question and the mixing chamber. As a result, a more even supply to the mixing chamber thus realised will also result in a more stable foam quality during the process. Another advantage of the use of the flow resistors are that controlling the respective pressure is simplified. The flow resistors are controlled indirectly by activation of the respective pump or other pressure-increasing means prior to the supply of one or more fluids to the mixing chamber, resulting at some point in the threshold value being exceeded and the flow through the flow resistor, and thus through the supply line in question, thus being started automatically. When the pumps are turned off, the pressure will decrease, as a result of which the flow will stop more or less of its own accord when the pressure for the flow resistor in question falls below the threshold value. Because the flow resistors block a flow in reverse direction, no return flow of mixed or unmixed material in the supply channel to the respective supplies will occur. The risk of fouling by foam, air or binder or, for example, of overloading of the pumps is thus reduced as well. Also the risk of rebound is significantly reduced, if not eliminated. Furthermore, the risk of overloading of the pumps that might occur with known devices in the unhoped-for situation that cocks remain open after activation of a pump is prevented. The object of the present invention is thus achieved.

With known devices, the problem of uncontrolled supply is frequently solved by means of operable shut-off valves and/or regulators. Although it is possible to use shut-off valves and/or regulators in a device according to the present invention, the present invention provided with the flow resistors at least partially obviates or at least reduces the need for this. Where it is important in a known device that all cocks and pumps are operated in the correct sequence and with a correct timing upon activation and deactivation, in a device according to the invention only the operation of the pump(s) of the material supply lines in question needs to be timed correctly. The timing depends on various factors that are known to the skilled person. Another advantage of the possibility of regulating the supply of base materials by means of the flow resistor is that fluids flow into the mixing chamber in a controlled or at least restrained manner in use, as a result of which mixing of the fluids can readily take place without there being a need to use moving mechanical mixing aids which require maintenance and which might interfere with the mixing process.

In a preferred embodiment of the present invention, the flow resistor in the first supply channel and/or the second flow resistor in the second supply channel is configured as a valve of a bicycle tyre. That is, the flow resistor comprises a shut-off valve of the supply line, through which a pipe extends. The pipe is open at the inflow end, seen in the desired direction of flow. At the downstream side, the pipe is axially closed and radially perforated. Near the perforation(s), the pipe is surrounded by a hose which is flexible at least in radial direction. The hose is so flexible that it tends to pinch itself closed against the pipe. When the pressure difference between the inflow side and the outflow side exceeds a threshold value, the hose will be pushed aside near the perforations of the pipe and a flow will be allowed. As a result, the flow resistor will remain closed when the pressure difference is lower than the threshold value. This is advantageous because the open side in question of the hose will be able to respond directly to an increase in the pressure on the respective side of the flow resistor.

If the hose is made substantially of a resilient material, thus comprising or being made of resilient material it will not be necessary to incorporate additional means for providing the hose with the required resilience.

The resilient material is preferably rubber or a rubbery material. Rubber has of its own properties that are required or desired for such a flow resistor. Also silicone and comparable materials are suitable for being used.

Preferably, at least one of the flow resistors is of an autonomous, i.e. independently operating, type. Preferably, such a flow resistor is present both in a binder solution supply line and in a gas supply line. A flow resistor of the independently operating type will open itself "automatically" when the pressure difference between the two sides of the flow resistor reaches one specific threshold value. When such a flow resistor is used, it is not necessary to incorporate control means for separately controlling the flow resistor. The flow resistor is thus controlled indirectly by activation of pressure-increasing means on the side of the flow resistor that faces the fluid store. This makes it easier to operate the device and prevents malfunctions caused by incorrect operation of the control means or by incorrectly timed activation or deactivation of the flow resistor, which is a shut-off valve rather than a resistor in the known device.

The present invention also relates to a spraying device comprising a supply device according to the invention.

A drawback of the known spraying devices is also the fact that the quality of the mixture from the mixing chamber is not sufficiently stable. The term "stable foam" as used herein is understood to mean a foam whose firmness and uniformity at a given point in the process changes relatively little during the operation of the spraying device. The quality of the foam is sensitive to material and resistance fluctuations and may therefore be insufficient for being able to apply a uniform coating layer by means of a spraying device. When known spraying devices are used, such situations are anticipated by using more material of the components of the foam, which adds to the cost and which leads to a longer drying time due to the use of an unnecessarily large amount of solvent.

Accordingly it is an object of the present invention to provide a spraying device by means of which a firm and uniform foam can be provided in a simpler and/or quicker manner. According to an aspect of the present invention, this object is achieved by the flow resistor provided between the binder solution store and the mixing chamber and the second flow resistor between the gas store and the mixing chamber. If the flow resistors are correctly adjusted or have an inherent desired value, the fluid supply line in question is thus not opened until a specific pressure is exceeded, as a result of which the supply line in question is not released by the flow resistor until the pressure, and thus the amount of the material in question to be supplied, is such that a good foam can be provided. As a result, a desired foam quality is quickly obtained already during the initial stage of the process, which reduces the loss of material upon activation and deactivation. The flow resistors prevent a flow of the flow within question to the mixing chamber when the pressure is too low, for example a spontaneous flow when no pressure is being built up for such a supply. Another advantage of the flow resistors is that they can be designed so that it has a dampening effect on pressure fluctuations in the fluid flow in question, i.e. when the specific threshold value of the pressure has been exceeded and the flow resistor releases the supply line. A more even supply to the mixing chamber thus also results in a more stable foam quality during the process. Another advantage of the use of the flow resistor is that the control of the respective pressure is simplified. The flow resistors are operated indirectly by activation of the pumps, or other pressure-increasing means, resulting in the threshold value being exceeded and thus in the automatic activation of the flow through the flow resistor and thus through the supply line in question. When the pumps are turned off, the pressure will decrease, as a result of which the flow will also stop more or less of its own accord when the pressure at the upstream end of the flow resistor in question falls below the threshold value. Since the flow resistor blocks a flow in the reverse direction, there will be no return flow of mixed or unmixed material in the supply line to the respective stores, either. Also a risk of fouling of the pumps by foam, air or binder is significantly reduced if not eliminated. Furthermore, the risk of rebound is significantly reduced, if not eliminated. The object of the present invention is thus achieved. Where it is important in a known spraying device that all cocks and pumps are operated in the correct sequence and with a correct timing upon activation and deactivation, in a device according to the invention only the operation of the pumps of the material supply lines in question needs to be timed correctly. The timing depends on various factors that are known to the skilled person.

In a preferred embodiment of the present invention, the spraying device comprises a control device for controlling the binder solution supply device, the gas supply device, the gas supply device and/or the supply device for coating material during use of the spraying device. A control device can be set to activate or deactivate, as the case may be, various parts of the device in the correct sequence and with the correct timing, for example upon activation and/or deactivation of the spraying device, on the one hand in order to provide a foam having the desired quality as quickly as possible and on the other hand in order to prevent rebound and/or return flow of materials. The skilled person will be able to determine the sequence and the timing. The operation of the spraying device is thus facilitated and the occurrence of operating errors can be prevented or at least significantly reduced.

According to the introduction of the present document, the present invention further relates to a method for applying a coating layer to a surface.

Referring to the discussion of the problems regarding the supply device and the spraying device according to the present invention, it is an object of the present invention, to provide such a method by means of which a better and/or more constant foam quality can be provided than with a known method, wherein it is possible to use the device already known previously. This object is achieved by a method according to claim 5. A first and a second supply channel from the binder solution store and the gas store, respectively, to the mixing chamber is to that end provided with a flow resistor as described with reference to the supply device and/or the spraying device. The flow resistors preferably also dampen fluctuations in the supply, for example caused by pressure fluctuations resulting from the increasing resistance of the valve rubber, in the open condition.

In a preferred embodiment of the present invention, the gaseous fluid comprises air. Ambient air is amply available for free and, moreover, is suitable for foaming a binder solution.

In a preferred embodiment, the binder solution according to the present invention comprises water. Water is a suitable solvent for various binders that are used in applying a coating layer to a surface. Furthermore, water is a relatively inexpensive and environmentally friendly solvent, so that the method according to the present invention can be carried out in an environmentally friendly manner.

It is preferable if the flow resistor dampens fluctuations in a fluid flowing through the supply line that are caused by, for example, pressure variations that occur. The flow resistor can to that end increase the resistance as the pressure of the supply flow increases and decrease the resistance as the pressure of the supply flow decreases.

In a preferred embodiment according to the present invention, the spraying device is provided with a supply line of fibres as loose particles of coating material, which is fed by a denester. In a preferred embodiment, the denester is designed for denesting fibres from a bale of fibres, said denester comprising an inlet for fibres, a loosening space disposed under the inlet, which at least has a bottom and a side wall surrounding the loosening space, turbulence means designed for generating turbulence in the loosening space and a stirring mechanism designed for displacing fibres present on the bottom of the loosening space to an inlet present in the bottom of the loosening space of a cellular wheel sluice, with a grid having a mesh width of 5-200 mm, which can be rotated by a rotary shaft, being provided at the upper side of the loosening space. Such a denester is new; it can also be used and be protected independently of a spraying device according to one of the other aspects of the invention.

The mesh width of the grid is preferably at least 10 mm. Preferably, the mesh width is at most 150 mm. It is furthermore advantageous if the rotary shaft of the grid also rotates the stirring mechanism.

According to the prior art, a supply line of fibres as loose particles of coating material comprises a loosening space provided with a stirring mechanism, which is fed with fibres in one of the following two manners: blades rotating in opposite directions are present in the loosening space, which blades are driven by a driving mechanism specially designed for that purpose and which, in use, scrape fibres from a bale or lump of fibre material introduced into the loosening space, or; fibres are manually rubbed off a bale or lump of fibres and subsequently introduced into the loosening space. The first solution is relatively costly, because the device must be provided with the blades rotating in opposite directions, which must overcome a relatively large amount of friction when a bale of fibres rests thereon, and with the additional driving mechanism for driving the blades in two opposite directions. The second solution is costly because it is a labour-intensive solution. According to the solution that is provided by the denester defined in the foregoing, fibres are scraped off the underside of a bale of fibres in a relatively uniform manner and carried into the loosening space, where further loosening of the fibres by the blades (can) take(s) place. Using such a denester as described above, it is thus possible to achieve a relatively fine and uniform distribution of fibres to be supplied to a cellular wheel sluice, and that in a relatively inexpensive manner.

In a preferred embodiment of a spraying device according to the present invention, the supply device for coating material comprises a cellular wheel sluice. A cellular wheel sluice is a metering device, it comprises a housing in which a cellular wheel is rotatably journalled, forming individual chambers separated from each other by separating elements. Furthermore, an inlet opening and an elongate outlet opening having a longitudinal axis and a transverse axis oriented perpendicularly thereto are provided. The outlet opening is preferably rectangular or oval in shape. The width-length ratio of the outlet opening is preferably at most 0.6, more preferably at most 0.45 and even more preferably 0.3.

In a new configuration of the spraying device according to the present invention, a supply device comprises a cellular wheel sluice provided with a cellular wheel which rotates about an axis of rotation and an outlet which opens into a particle supply channel and a blowing device which, in use, blows a transport medium in a conveying direction for the particles, and wherein the particle supply channel and/or the outlet of the cellular wheel sluice is/are oriented obliquely relative to the axis of rotation under the cellular wheel of the cellular wheel sluice. The angle which the axis of rotation and the longitudinal axis of the discharge channel include preferably ranges between 5 and 50 degrees, preferably between 10 and 40 degrees, even more preferably between 13 and 30 degrees.

Such an "oblique" orientation of a cellular wheel sluice and the associated discharge channel is new; it can also be used and protected independently of a spraying device according to one of the other aspects of the invention, both in its basic form and in a preferred embodiment as referred to above or below. By using such a new orientation of the outlet opening of the cellular wheel sluice and a channel into which the outlet opening opens, and in which, in use, material exiting the outlet opening is carried away from the outlet opening, a gradual distribution of material in a (particle supply) channel extending under the outlet, or at least a more uniform distribution than in the case of existing combinations of a cellular wheel sluice and a discharge channel can be realised by means of a cellular wheel having straight blades, i.e. a proximal edge of the blade located on the side of the axis of rotation extends parallel to the opposite distal edge engaging the wall of the cellular wheel sluice. The ratio between the length of the cellular wheel and the diameter thereof preferably ranges from 0.7 to 1.5, with the cellular wheel preferably comprising 6 to 8 separating elements. The ration furthermore preferably ranges between 0.9 and 1.4, more preferably between 1.1 and 1.3. The diameter of the discharge channel is preferably at most 50%, more preferably at most 40%, even more preferably at most 30% of the diameter of the cellular wheel.

In the case of an oblique orientation of the outlet, the cellular wheel sluice will deliver the fibres more evenly to the particle supply channel, in use resulting in a more uniform distribution of particles in the particle supply channel than in the case of a device having an outlet and a particle supply channel which are oriented parallel to or perpendicular to the axis of rotation of the cellular wheel sluice. With a spraying device according to the invention, this leads to a more uniform spray image and thus to a more even surface of the resulting spray coating. When used for blowing dry fibres onto or into a structure, for example, without the addition of foamed or non-foamed binder, this leads to a more uniform distribution and, as a result, to a reduced consumption of material and thus to a saving of costs. In the case of an oblique orientation of the (particle supply) channel, the fibres will be delivered more evenly, seen in time, to the particle supply channel, and a more uniform distribution of particles in the particle supply channel is obtained in use because the particles are received in the (particle supply) channel at an oblique angle relative to the outlet. This also leads to a more uniform distribution than in the case of a device having an outlet and a particle supply channel which are oriented parallel to or perpendicular to the axis of rotation of the cellular wheel sluice. In the case of a spraying device according to the invention, this will lead to a more regular spray image and thus to a more even surface of the resulting spray coating.

The angle that the particle supply channel and the axis of rotation of the cellular wheel sluice include is preferably determined by the geometry of the valves of the cellular wheel sluice and the outlet (to the discharge channel), so that a blade of the cellular wheel sluice will not pass the outlet (to the discharge channel) before the next blade reaches or at least substantially reaches the outlet to the discharge channel. In a preferred embodiment, setting means are provided for setting the angle between the axis of rotation of the cellular wheel sluice and the longitudinal direction of the discharge channel. In a preferred embodiment, a blowing device is provided which is designed for blowing a gas, preferably air, through the discharge channel. Thus, lightweight loosened bulk material exiting the outlet opening can be carried along with the gas flow in the discharge channel in use.

It is known to arrange the blades of a wheel of a cellular wheel sluice with a slight pitch on the axis of rotation, so that the blades are obliquely oriented relative to the axis of rotation. That is, the line of contact of a blade with the inner wall of the sluice does not extend parallel to the axis of rotation, as a result of which the blade has a leading part and a trailing part, as it were. This is a relatively costly solution, however, because the manufacture thereof requires precision in order to ensure a good constant contact between a distal end of the blade and the inner wall of the sluice and because the blades are subject to a relatively great deal of wear. This is a consequence of the requirement that the blades must form a fluid-type seal with the inner wall of the sluice in order to prevent particles being driven against the conveying direction of the cellular wheel sluice as a result of the overpressure in the particle supply channel. Further measures that are required for the cellular wheel sluice are well-known, for example measures to obtain an adequate seal between the blades and the inner wall of the cellular wheel sluice so as to prevent undesirable leakage flows.

In a preferred embodiment of the invention, the spraying device comprises a foaming head for use in combination with the mixing housing in a foaming device, being the spraying device, by means of which, in use, a coating layer is applied to a surface.

In known foam nozzles of foam-based spraying devices of the type referred to in the introduction, a supply device for loose particles of fibre material, for example coating material, opens centrally in a mixing head, and foamed binder flows around the mixing housing into a spray head. The foam is then driven inside by the wall of a foam the supply line, so that it finds its way into the fibre supply flow that moves straight into the spray head. The inventor has discovered that when supplied foam and loose particles are mixed in this way, a great deal of carefully built-up foam is damaged/destroyed directly upon coming into contact with the flow of loose particles in the mixing housing. That is, the quality of the foam degrades prematurely and undesirably. Another drawback of the known device is a less adequate distribution of the foam and thus less adequate mixing of the loose particles and the foam.

Accordingly it is an object of the present invention to provide a foaming device comprising a foaming head of the type referred to in the introduction, in which the quality of the foam from a foam supply line will not degrade, or at least to a lesser extent, upon being mixed with loose particles of material, and in which the foam is evenly distributed in the mixing housing and thus over the loose particles, which leads to a saving of costs and a shorter drying time. This object is achieved by the invention in that at least one outlet for loose particles of material and a foam outlet provided with two or more outflow openings open into the mixing housing, which outflow openings are configured and oriented so that, in use, foam is driven into the mixing housing from at least the larger part of the outflow openings at an acute angle relative to a main direction of flow of the loose particles from the outflow openings. By this is meant that the two flows are oriented at an angle relative to each other, to be true, more or less in the same direction. The foaming head preferably has several relatively small outflow openings, through which the foam forcefully spreads over the entire mixing housing as a result of a relatively large speed during use of the foaming head. Because the direction of flow of the foam on the one hand and that of the loose particles on the other hand are at least more or less the same, the loose particles will keep the foam largely intact during the first contact. Preferably, the foam on the one hand and the particles on the other hand move at a more or less comparable speed in the main direction of flow through the mixing housing upon being mixed. The relatively small difference in speed and direction and flow of the foam on the one hand and the loose particles on the other hand is conducive to an adequate covering of the coating material with the foam. The object aimed at is thus achieved by the present invention.

In a preferred embodiment of the present invention, the acute angle between the direction of flow of the loose particles and the direction of flow of the exiting foam ranges between 5 - 65°. In the case of an angle of up to 65°, the flows of the loose particles and the foam are mixed to a sufficient degree. In the case of an angle of less than 65°, loose particles are prevented from degrading the quality of the foam, at least to a significant extent, when the flow of loose particles on the one hand and the flow of foam on the other hand mix together. Furthermore preferably, the angle is at least 30°. More preferably, the angle is at most 45°.

In particular if the outflow openings are located at or near the outer edge of the mixing housing, but also if the outflow openings are located in the centre of the fibre flow, it is possible, however, using an inflow of foam or fibres into the mixing housing more or less at right angles thereto, and thus to the fibres and the foam flowing into said mixing housing, to realise an angle between two flows being mixed together that is significantly smaller than 90°, for example an angle within one or more of the aforesaid preferred ranges. This is possible, for example, by causing the flow that enters the mixing housing at right angles to flow into the mixing housing at a radial distance from the flow that enters the mixing housing in a straight line. The straight flow will generate a venturi effect in that case, as a result of which the flow entering the mixing housing at right angles will be deflected in the direction of the straight flow. When the two flows come into contact with each other, the angle between the two flows may be 0° or 45°, depending on the speeds and the application. This has been recognised, and thus such embodiments, also fall within the claimed scope of the present invention, although the flows are oriented at right angles relative to each other upon entering the mixing housing.

In a preferred embodiment of the present invention, the outflow openings of the foam outlet open substantially centrally into the mixing housing. The one or more outlets for loose particles may be oriented radially outward of the outflow openings of the foam outlet. The number of outflow openings of the foam outlet is preferably at least three, more preferably at least five and even more preferably at least eight, fifteen or thirty, if the foam outlet is located centrally, i.e. on the inner side of the outlet for loose particles, or preferably at least eighteen, more preferably at least twenty-five or thirty, if the foam outlet is located at the outer circumference, i.e. on the outer side of the outlet for loose particles, so that a good distribution of the foam flowing into the mixing housing can be realised.

It is preferable in that regard if the outflow directions of the outflow openings of the foam outlet have a substantially diverging orientation. The foam exiting the outflow openings is thus sprayed slightly radially outward from a central region in the mixing housing, so that the foam will mix with loose particles from the radially outwardly oriented flow of loose particles.

Alternatively, the outflow openings of the foam outlet open into the spray head at least substantially near the outer edge of the mixing housing. With such an orientation of the foam outlet, the foam outflow openings can surround one or more loose particles outlets that open more centrally into the mixing housing. It is preferable in that regard if the number of outflow openings near the outer wall is at least 10, more preferably at least 18 and most preferably at least 25 or even 30. Because of the large number of outflow openings, which are preferably more or less evenly distributed over the outer edge, the foam is already pre-distributed to a fair extent upon entering the mixing housing. Important is that the foam from the various outflow openings preferably flows from the outflow openings in subflows having different directions of flow, so that uniform mixing of foam and loose particles can take place.

It is preferable in that regard if the outflow openings of the foam outlet have a substantially converging orientation. Foam is thus sprayed slightly inward into the spray head, as a result of which the foam and the loose particles from the loose particle outlet can mix.

It is furthermore preferable for the number of outflow openings not to exceed sixty-five. If a (too) large number of outflow openings is used, the total area of the outflow openings will increase, as a result of which the speed of the foam at the outflow side will increase relatively little.

In a preferred embodiment of the present invention, an outflow opening of the foam outlet has a diameter of at least 1.2 mm. A smaller foam outlet involves the risk that the foam quality of foam that passes the outflow opening through too small a flow-through opening will degrade. Furthermore preferably, the diameter of an outflow opening is at least 1.5 mm. If an outflow opening is not circular in shape, the area of the outflow opening is preferably at least 1.10 mm², furthermore preferably 1.75 mm².

It is furthermore preferable if an outflow opening of the foam outlet has a diameter of at most 4.0 mm, more preferably at most 3.0 mm. When a larger diameter of the outflow opening is used, the speed at which the foam flows into the mixing housing may become too slow. If an outflow opening is not circular in shape, the area of the outflow opening is preferably at most 12.5 mm², furthermore preferably at most 7 mm².

In a preferred embodiment of the present invention, the foaming head is provided with quick-coupling means designed for quickly coupling and uncoupling the foaming head, or at least the central inlet thereof, directly or indirectly to and/or from the mixing housing. In the case of blockage of additive outlets or foam outlets this makes it possible to eliminate the blockage in a relatively simple manner by replacing the foaming head.

The present invention further relates to a further improvement of a spraying device according to the invention.

In prior art foam-based spraying devices of the type described in the preceding paragraph, the supply device for loose particles of coating material opens centrally into the mixing housing, and the foamed binder enters the spray head around the mixing housing. The foam is then driven inward by the wall of the spray head, thus entering the fibre supply flow that flows straight into the spray head. The inventor has discovered that when the flows of foam and loose particles of coating material are mixed in this manner, a great deal of carefully built-up foam is damaged/destroyed directly upon coming into contact with the flow of loose particles of coating material in the mixing housing. That is, undesirable premature degradation of the foam quality takes place. Another drawback of the known device is a less adequate distribution of the foam and thus less adequate mixing of the loose particles of coating material and the foam.

Accordingly it is a further object of the present invention to provide a spraying device according to the invention wherein the quality of the foam from the hose will not degrade, or at least to a lesser extent, upon being mixed with the coating material and wherein the foam is evenly distributed in the mixing housing and is thus evenly distributed over the particles of coating material. As a result, the amount of material to be used, for example binder and/or solvent, can be reduced, leading to a saving of costs and a shorter drying time. According to the invention, this object is accomplished in that at least one outlet for coating material and a foam outlet provided with two or more outflow openings open into the mixing housing, which outflow openings are so configured and oriented that, in use, the foam is driven from at least the larger part of the outflow openings into the mixing housing at an acute angle relative to the main direction of flow of the coating material from the outflow openings. The advantages correspond to those discussed hereabove. To realise an optimum and controlled operation, the spraying device preferably comprises a control device for controlling the binder solution supply line, the gas supply line and/or the supply device for coating material during use of the spraying device.

According to a preferred embodiment of the invention, the foam flows from a foam outlet provided with two or more outflow openings into the mixing head and coating material flows from at least one outlet for coating material into the mixing housing, wherein the foam flows from the outflow openings in a direction of flow that extends at an acute angle relative to the main direction of flow of the coating material.

To provide a good quality mixture, in which the foam is preserved relatively well upon mixing of the flow of foam and the flow of additive, the foam flows into the mixing housing from a foam outlet provided with two or more outflow openings and the coating material flows into the mixing housing from at least one outlet for coating material, wherein the foam flows from the outflow openings of the foam outlet into the mixing housing in a direction of flow that extends at an acute angle relative to the main direction of flow of the coating material.

In a broader sense, the preferred embodiment of the present invention relates to a method for causing a foam flow and an additive flow to flow together in a substantially closed mixing housing for the purpose of mixing the two together, wherein the foam flows from a foam outlet provided with two or more outflow openings into the mixing housing and wherein the foam flows from the outflow openings of the foam outlet into the mixing housing in a direction of flow that extends at an acute angle relative to the main direction of flow of the additive. According to the latter aspects, the respective methods solve a problem analogous to that of the foaming head discussed here above for realising respective objectives analogous to the objectives of the devices according to the present invention.

A preferred embodiment of the present invention relates to a spray head for a spraying device by means of which, in use, a coating layer is applied to a surface. Such a spray head is known from spraying devices by means of which, in use, a coating layer is applied to a surface. Said known spraying devices have a substantially shape-retaining spray head with an outlet that extends in line with the supply device for coating material, whilst foamed binder is added from one side. A drawback of the known spray head used in such a spraying device, however, is the fact that it is difficult, even for an experienced operator, to spray a coating layer evenly and in a relatively constant thickness onto a surface in one go. To that end, an operator places the spray head at a slight angle relative to a surface to be coated and moves the spray head in a rotary motion during the application of the coating layer to a surface. Besides an irregular outflow, this method also leads to a relatively rough surface and a loss of material and time, and to fouling and waste.

Accordingly it is an object of the present invention to provide in the preferred embodiment a spray head by means of which, in use, a sprayed layer having a substantially uniform thickness can be sprayed more easily than by means of the known spray head in the known spraying devices, for example for applying a relatively uniform and/or even layer of coating material to a surface. This object is achieved by the present invention in that the spray head comprises a horn having a cross-section which tapers from an at least substantially circular shape to a substantially V-shape from a foam inlet in the direction of the spray nozzle, wherein the horn has a central axis which is curved in the direction of the spray nozzle, and wherein the cross-sectional area of the horn decreases in the direction of the spray nozzle. Within this framework, the term "substantially circular" is to be broadly interpreted, it relates to the cross-sectional shape of a supply line to which the horn is connected in use. Thus, it would also be possible to use an oval shape. The scope of the present invention is intended to extend to situations in which the cross-sectional shape on the inflow side of the horn may be adapted, artificially or non-artificially, by means of a reducing piece or coupling piece. The term "substantially V-shaped" as used herein is understood to mean a shape wherein the horn comprises two legs on the outflow side, which legs extend in a diverging manner, seen in cross-sectional view, from a part located in or near the centre. Preferably, but not necessarily, the cross-section is symmetrical relative to a plane that extends through the central axis. The legs may have different lengths and/or widths. In a preferred embodiment, the legs extend substantially rectilinearly, but alternatively they may be bent either inward or outward. This will be explained hereinafter, inter alia with reference to the appended figures. When an embodiment according to the present invention is used, shearing forces that slightly densify the foam-coating material mixture and spread it over the diverging V-like shape develop in the coating material, when incorporated in foam, during use of the spray head, thereby giving the jet from the spray nozzle a greater width than does the spray head of the known devices. By using a V-shape, for example for applying coating material to a surface, the coating material is sprayed from the horn in the direction of a surface to be coated in a layer having a substantially homogeneous thickness. The object aimed at by the invention is thus achieved. The V-like shape may be configured in various ways, depending on the application, for example a V including an obtuse angle, an acute angle, a rounded V-shape, a V shape having straight legs, a V having bent, diverging legs, a boomerang shape, etc; in fact any shape in which the legs, the ends of the spray nozzle, move out rearwards, seen in the direction toward the outside curve of the horn. Although the spray head has been explained on the basis of an exemplary application in the foregoing and also in the description of preferred embodiments, it is also possible to use the spray head according to the invention in other applications, in particular those applications where it is desirable that a layer of material having a substantially uniform thickness or an even distribution is sprayed or blown from the spray head. Such a horn shape may be complex. The horn may have been formed by 3-D printing, for example. Because of the curved shape of the central axis of the horn, a flow of coating material, possibly with foam, is deflected in the horn and flung against the inner wall of the outside curve of the horn by the centrifugal force. As a result, the coating material will spread over the V-like shape of the spray nozzle that develops in the direction of flow. It is important that the mouth has a V-like shape on the side of the outside curve, with the point of the V being directed toward the outlet of the spray nozzle. The inside curve side may also have a corresponding shape, with the point of the V of the outlet being directed away from the spray nozzle. Furthermore, the curved shape may cause a slight degradation of the foam during its passage through the horn. Preferably, the spray nozzle is substantially V-shaped at the outside curve, against which V-shape the coating material is flung in use. The horn develops in a curve along with the direction of flow, from a round shape at the entry of coating material into the mixing housing to the essentially V-shape of the spray nozzle. When the foam-coating material mixture is supplied, the latter shape provides an even distribution over the spray nozzle, which is substantially V-shaped on the outer side, as a result of the centrifugal force to which the mixture is subjected in the gradually developing essentially V-shape of the curve. The wall in the inside curve may have a similar cross-sectional configuration, but the effect thereof is less pronounced than in the case of the outside curve. During use of the horn, the curved shape of the horn thus leads to the generation of centrifugal forces in a foam-coating material mixture being transported, which centrifugal forces on the one hand fling the foam-coating material mixture against the inner wall of the outside curve of the horn, causing it to mix and possibly densify, and which on the other hand cause the mixture to be spread better and more evenly widthwise upon exiting than is the case with spray heads of known devices, due to the configuration of the wall of the outside curve of the spray nozzle, which develops substantially into a V-shape in the direction of the spray nozzle. Upon being sprayed onto a surface, said wider fan of exiting coating material will more quickly and more easily result in an even texture than is the case with prior art devices.

Since the cross-sectional area of the horn decreases in the direction of the spray nozzle, for example from 1600 mm² to 400 mm², a higher speed is imparted to a foamy mixture. As a result of said increasing speed, the mixture will be pressed against the outer wall of the curve with relatively more force, on the one hand causing it to be mixed and on the other hand causing it to be distributed better widthwise over the outer side of the developing V-shape. Because the mixture is pressed against the outer side of the curve, partial degradation of the foam can take place, if desired, depending on the applicator's wishes. The decrease of the cross-section preferably takes place gradually. This prevents the occurrence of abrupt constrictions that may have a negative effect on the quality of the foam-particle mixture flowing through the horn.

In a preferred embodiment of the present invention, the cross-sectional area of the horn decreases by 5 - 99%, more preferably by 40 - 90%, in the direction of the spray nozzle. As a result of this constriction, a higher speed is imparted to the foamy mixture. As a result of said increasing speed, the mixture will be pressed against the inner wall of the outside curve with relatively more force, on the one hand causing it to be mixed and on the other hand causing it to be distributed better widthwise over the outer side of the developing V-shape. Because the mixture is pressed against the inner side of the outside curve, partial degradation of the foam may moreover take place. By selecting the reduction of the cross-section in combination with the setting of the amount of transport air and foam-particle mixture, it is possible to determine in part how much of the original foam will be degraded and what the texture of the coating material will be.

It is preferable if the legs of the V include an obtuse angle with each other. The preferred shape of the angle depends on the amount of transport air, the coating material, the application and the desired spray image. The angle preferably ranges between 90° and 179°, more preferably the angle is at least 120° and/or at most 170°.

In a preferred embodiment of the present invention, the cross-section of the spray nozzle is kidney-shaped. This shape is conducive to an even distribution of the fibres widthwise over the spray nozzle and leads to an even coating layer being applied to the surface.

In a preferred embodiment of the present invention, the cross-section of the wall in the outside curve of the spray nozzle, against which the fibres are pressed as a result of the centrifugal force, is spherical in shape. This shape is conducive to an even distribution of the fibres widthwise over the spray nozzle and leads to an even coating layer being applied to the surface.

In a preferred embodiment of the present invention, the cross-section of the wall in the outside curve of the spray nozzle, against which the fibres are pressed as a result of the centrifugal force as described above, is provided with notches and protrusions. This shape is conducive to an even distribution of dry base materials widthwise over the spray nozzle and leads to an even coating layer being applied to the surface.

Preferably, the radius of the central axis ranges between 1 - 1000 mm. The selection of the radius of the central axis depends on the application, the desired quality, the material to be displaced and the flow rate of the air and the mixture.

It is furthermore preferable if the spray head is defined by a wall which comprises a thickening on the inner side of the wall near the spray nozzle. As a result of the presence of the thickening of the outer wall leads, an even better spraying result is obtained.

From the foregoing it will be understood that several of the above-described aspects, used in combination with each other, will enhance the desired effect, viz.
1. The possibility to cause the foam to disintegrate partially before it is sprayed from the spray head. The foam initially functions to realise an adequate distribution of binder over the coating material in the horn, with the foam making it possible to use a minimum amount of binder. Once the binder is properly distributed, the foam no longer has a function in this regard and can be allowed to disintegrate to a greater or lesser extent upon exiting the spray head, depending on the applicator's wishes.
2. Accelerating the coating material through the constriction in the horn, as a result of which a compact and flat spray image is obtained.
3. Spreading the coating material over the wings of the V-shape as a result of the V-shape developing from the circular shape in the horn, as a result of which a wide and uniform image is obtained.

With a view to realising an optimum and controlled operation of the spraying device it is preferable if the spraying device comprises a control device for controlling the binder solution supply line, the gas supply line and/or the supply device for coating material during use of the spraying device.

The present invention further relates to a method according to the invention, wherein the binder-coating material mixture is sprayed onto the surface by means of a spray head in step f), wherein the spray head comprises a horn having a cross-section which tapers from an at least substantially circular shape to a substantially V-shape from a foam inlet toward the spray nozzle, wherein the horn has a central axis which is curved in the direction of the spray nozzle, and wherein the cross-sectional area of the horn decreases in the direction of the spray nozzle. The advantages of such a method have already been discussed in the preceding paragraphs. The method can also be used for applications other than the specific application of applying a coating layer to a surface. Accordingly, the present invention also relates to a method for spraying a material from a spraying device through a spray head, wherein the material flows into an at least substantially circular inlet in a horn of the spray head, wherein the flow of material is deformed into a flow having a substantially V-shape during its passage through the horn, wherein the horn has a central axis which is curved in the direction of the spray nozzle, and wherein the cross-sectional area of the horn decreases in the direction of the spray nozzle. The material may comprise a foam or a coating material mixture, but it may also comprise another dry and fluid substance, such as mortar, powder, a granulate, liquid, stucco material, earth, sand, food products, fertilizer products, paint, nanoparticles, etching materials, products to be sorted and other materials.

The present invention will now be explained in more detail by means of a description of an exemplary embodiment of a method and a spraying device according to the invention with reference to the appended drawings, in which:
Figure 1 is a schematic representation of a method according to the present invention for applying a coating layer to a surface;
Figure 1a is a perspective view of a spraying device according to the present invention;
Figure 1b is a schematic side view of the spraying device of figure 1a;
Figure 2 is a perspective view of a flow resistor suitable for use in a supply line of a spraying device according to figure 1a;
Figure 3 is a perspective view of a mixing chamber for a device as shown in figure 1a;
Figure 3a is a cross-sectional view of figure 3;
Figure 4 is a perspective view of a foaming head for use in a device as shown in figure 1a;
Figure 4a is a cross-sectional view of figure 4;
Figure 5 is a perspective view of a spray head for use in the device and the method shown in figures 1a, 1b, 1c;
Figure 5a is a top plan view of the spray head of figure 5;
Figure 5b is a side view of the spray head of figure 5a;
Figure 6 is a perspective view of an alternative spray head for use in a spraying device and method as shown in figures 1, 1a, 1b;
Figure 7 is a perspective view of another alternative spray head for use in a spraying device according to the present invention;
Figure 8 is a schematic view of a denester for use in the spraying device of figure 1;
Figure 9a is a schematic view of a preferred embodiment of a cellular wheel sluice for use in the device of figure 1;
Figure 9b is a schematic view of an alternative preferred embodiment of a cellular wheel sluice for use in the device of figure 1;
Figure 10 is a schematic view of a cellular wheel sluice and a channel located thereunder;
Figure 10a is a schematic view of an alternative arrangement of a cellular wheel sluice and a channel located thereunder;
Figure 10b is a schematic view of another alternative arrangement of a cellular wheel sluice and a channel located thereunder; and
Figure 11 shows a number of alternative exemplary embodiments of the edge of a spray nozzle associated with the outside curve of a horn.

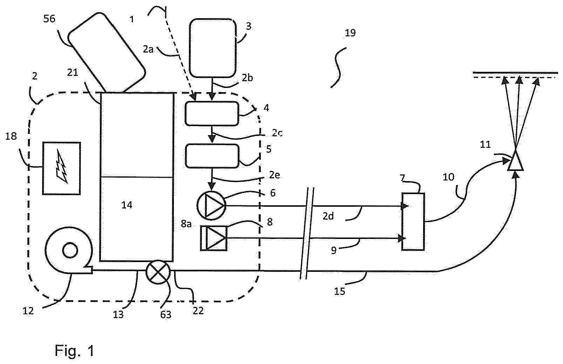

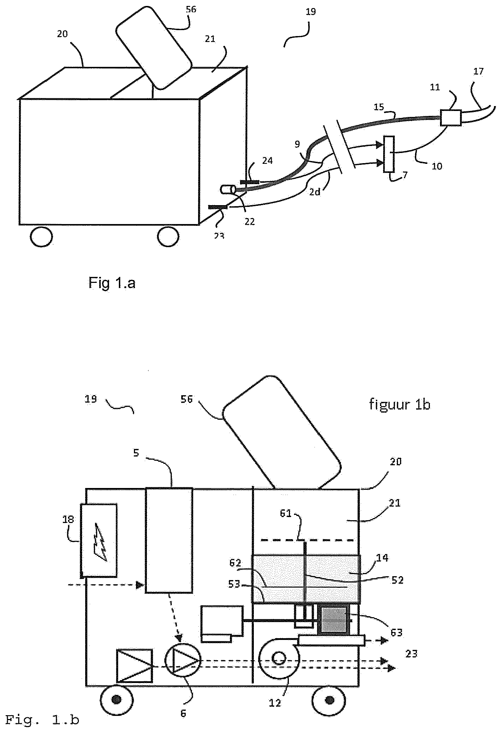

Referring now to figure 1, there is shown a schematic block diagram of a method according to the invention. Via a water inlet 1, water is supplied to a mixer 4 via a supply channel configured as a hose 2a and (latex) adhesive is supplied to said mixer from an adhesive store 3 via a supply channel configured as a hose 2b, in which mixer the water and the adhesive are mixed into an adhesive solution. The adhesive solution is carried to a buffer vessel 5 via hose 2c, in which buffer vessel the adhesive solution is temporarily stored. The buffer vessel 5 may contain an intermediate store of adhesive solution, which is realised by unlinking the production of adhesive solution on the one hand from the requirement of adhesive solution on the other hand. Alternatively, the buffer vessel 5 may contain an adhesive solution that has been produced independently of the present process; the adhesive solution may have been purchased, for example. Via a hose 2e, adhesive solution from the buffer vessel 5 is pumped in the direction of a hose 2d, and subsequently into a mixing chamber 7, by a pump 6. Once the overpressure in the hose 2d has exceeded a specific threshold value, 30 kPa in this case, a valve functioning as a flow resistor will open and the supply of adhesive solution to the mixing chamber 7 is started. At the same time, air from an air store 8a is introduced into the mixing chamber 7 via a gas supply line 9 by means of a compressor 8. Also in this case the valve functioning as a flow resistor will not open the air supply line 9 until the overpressure exceeds a threshold value, 30 kPa in this case. In the mixing chamber 7, air is mixed with the adhesive solution and thus foam is generated from adhesive, water and air. From the mixing chamber 7, the foam is blown into the spray head 11 through a hose 10 and a mixing housing 16 (not shown in figure 1). At the same time, air is blown via a blowing device 12 through a hose 13 in the direction of an outlet 22 of a fibre store 14, in which fibres have been loosened and fluffed up, and carried to the spray head 11 via a fibre hose 15. Thus, the hose 10 and the fibre hose 15 open into the spray head 11, in which spray head 11 the foam and the fibres in the mixing housing 16 are mixed together and exit the device via a horn 17 of the spray head 11 provided with the spray nozzle 17a. The method in question can be controlled via a control device 18, which controls the pump 6, the compressor 8, the fibre supply line by means of a blade valve 63, and the blowing device 12.

Referring now to figure 1a, there is shown a perspective view of a spraying device 19 according to the present invention. The spraying device 19 comprises a casing 20, in which a hopper 21 for the supply of (compressed) fibre material is provided. The hopper 21 comprises means (not shown) for denesting fibres from a fibre stock being supplied in the form of a bale. Loosened fibres are blown through a fibre outlet 22 into the fibre hose 15 by means of the blowing device 12 (not shown in figure 1a). Located on one side of the fibre outlet 22 in the casing 20 is an adhesive solution outlet 23. Located on the other side of the fibre outlet 22 is an air outlet 24. The adhesive solution outlet 23 is connected to an adhesive hose 2d provided with a valve (not shown in figure 1a). The air outlet 24 is connected to an air hose 9 provided with a valve (not shown in figure 1a). The adhesive hose 2d and the air hose 9 open into a mixing chamber 7, which is in turn connected, via a foam outlet, to a hose 10 that opens into the spray head 11. The fibre hose 15 extends directly from the fibre outlet 22 to the spray head 11. The spraying device 19 is designed to carry out a method according to figure 1. The device shown in figure 1a is made up of a number of generally known parts, such as storage vessels, hoses, compressors, pumps and the like. The aforesaid parts are generally known to the skilled person and require no further explanation. The device according to the present invention comprises a few more specific parts, such as the mixing chamber 7, the spray head 11 with the foaming head 38 and the horn 17 provided with the spray nozzle 17a, the fibre outlet 22 and the denester 21. Said specific parts will be explained in more detail hereinafter with reference to the following figures.

Figure 1b shows a schematic, partially cutaway side view of the spraying device 19 of figure 1a. The spraying device 19 is in the form of a casing 20 on wheels. Located inside the casing 20 are a control device 18 with a buffer tank 5 for an adhesive solution and a pump 6. Located on the right-hand side of the figure, corresponding to the front side of the casing 20, is a hopper 21 for fibre bales 56, which are supplied to the fibre store 14. Located inside the hopper 21 is a grid 61 of the denester, which is driven together with the stirrer 62 by the rotary shaft 52. Located under the bottom 53 is a cellular wheel sluice 63, above a channel through which the blowing device 12 blows air.

When the method of figure 1 is used with the spraying device 19 of figure 1a, a bale of compressed fibre material is present in the hopper 21, which fibre material can be denested in a known manner, so that essentially loose fibres are blown from the fibre outlet 22 into the fibre hose 15 by a blowing device 12. Located inside the casing 20 is furthermore a buffer vessel 5 (not shown in figure 1a) in which an adhesive solution of adhesive and water is stored, which buffer vessel is connected to the adhesive solution outlet 23 and the adhesive hose 2d. The buffer vessel 5 may be connected to a mixer 4 (not shown in figure 1a), in which water and adhesive are being mixed. The buffer vessel 5 may also be a separate, external vessel, in which a "purchased" or at least separately produced amount of adhesive solution is contained. This makes no difference as regards the operation of the spraying device 19. Via a pump 6 (not shown in figure 1a), adhesive solution from the buffer vessel 5 is driven to the adhesive hose 2d. The adhesive hose 2d extends some distance to the mixing chamber 7, being in contact with the fibre hose 15 over a large part of said distance. Furthermore present in the casing 20 is a compressor 8 (not shown in figure 1a), which drives air, either ambient air or gas from a gas bottle, to the mixing chamber 7 via the air outlet 24 and the air hose 9.

The operation of the mixing chamber 7, into which the adhesive hose 2d and the air hose 9 open, will be described hereinafter. Via connectors, air and adhesive solution, respectively, enter the mixing chamber 7 separately. Because of the valves, the two fluids flow into the mixing chamber 7 under the influence of an overpressure of about 30 kPa of the adhesive hose 2d and the air hose 9, respectively, in comparison with the pressure in the mixing chamber 7. The air and the adhesive solution then flow into the connecting channel 37, where the two flows mix and a foamy substance is formed.

The foamy substance, hereinafter called "foam", exits the mixing chamber 7 via the connecting piece 26 and enters the hose 10. The foam is subsequently driven through the hose 10 under pressure both from the air line 9 and from the adhesive solution line 2d.

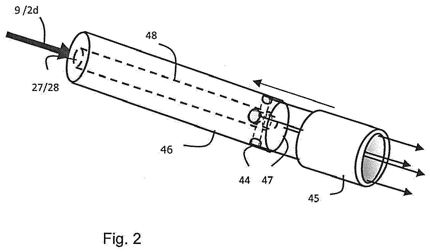

Figure 2 shows a perspective view of a valve functioning as a flow resistor 27, 28 for use in an air line or an adhesive solution line in the method and device as schematically illustrated in figures 1, 1a and 1b. Figure 2 shows the inlet of the flow resistor 28 for the adhesive solution or the inlet of the flow resistor 27 for the air through the rear wall 35 with two holes to the connecting channel 37 of the mixing chamber 7. The fluid flows through the pass-through channel 48 of the valve of the flow resistor 27 or 28 in the direction of the connecting channel 37 into the mixing chamber 7. The valve of the flow resistor 27 or 28 extends with a stiffening element 46 into the connecting channel 37, where adhesive solution and gas are mixed. The channel 48 is axially closed (47) on the side of the connecting channel and provided with a few radial perforations 44 at the end. The fluid is pressed through said radial perforations by the pressure of the pump 6 or the compressor 8 against the pressure of the resilient rubbery hose 45. In this case said hose allows the fluid to pass from a pre-pressure of about 30 kPa along the open end of the hose 45 that surrounds the stiffening element 46, which has an open end facing the stiffening element 46. In the connecting channel 37 in the mixing chamber 7, the fluid from the respective valves of the flow resistors 27 and 28 is mixed into a foamy mixture, which is driven to the outlet of the mixing chamber 7 and subsequently downstream through the hose 10 in the direction of the spray head 11, as will be described hereinafter.

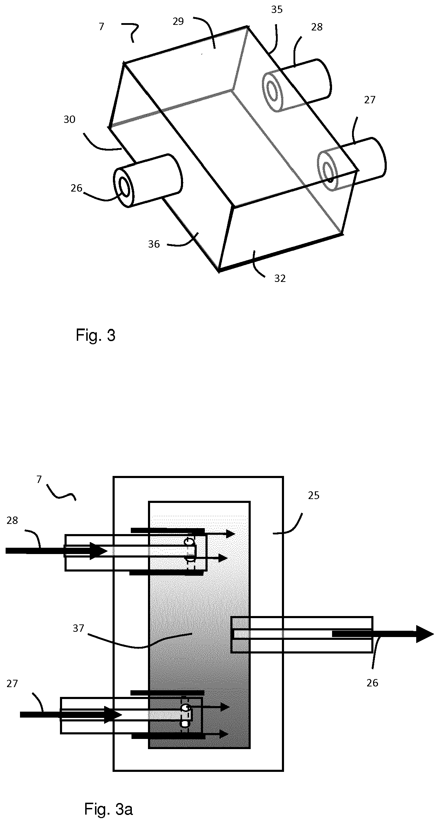

Figure 3 shows in perspective view an embodiment of a mixing chamber 7 for use in the method and the device of figures 1 and 2. Figure 3a shows a cross-sectional view of the mixing chamber 7 of figure 3, in which the connector 26 and the connectors of the flow resistors 27, 28 which are shown separately in figure 3, form part of a housing 25 of the mixing chamber 7. The mixing chamber 7 comprises a housing 25 having a closed upper wall and bottom wall 29 and 30, respectively, a closed side wall 31 and a side wall 32. Through holes are provided in a rear wall 35, which holes function to receive connectors of the flow resistors 27, 28 for an air line (not shown) and an adhesive solution line (not shown), respectively. The front wall 36 is provided with a through hole for receiving a connector 26 for a hose. From figure 3a it can be inferred that, in the connected condition, the outlets of the connectors of the flow resistors 27, 28 and an inlet of the connector 26 are in communication with each other via a connecting channel 37.

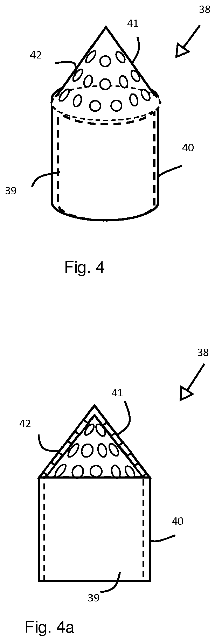

From the hose 10, the foam is sprayed into the spray head 11 by means of a foaming head. In figure 4 a preferred embodiment of a foaming head 38 is shown in perspective view. Figure 4a shows a vertical cross-sectional view through the central axis of the foaming head 38. The foaming head 38 has a circular internal cross-section for receiving the end piece of the hose 10 in a receiving space 39. A jacket 40 surrounds the receiving space 39 for the end piece of the hose 10. The foaming head 38 has a spray head 41 for foam in the form of a cone and is provided with outlet openings 42 which, as a result of the conical shape of the spray head 41, are positioned at an angle relative to the direction of flow of foam in the hose. In the exemplary embodiment shown in figure 4, said angle is 45°. Foam will thus flow from the foaming head 38 into the spray head 11 at such an angle.

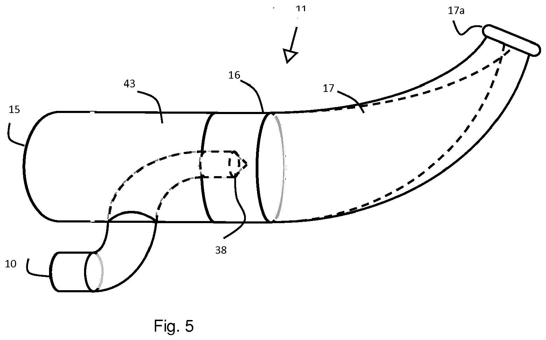

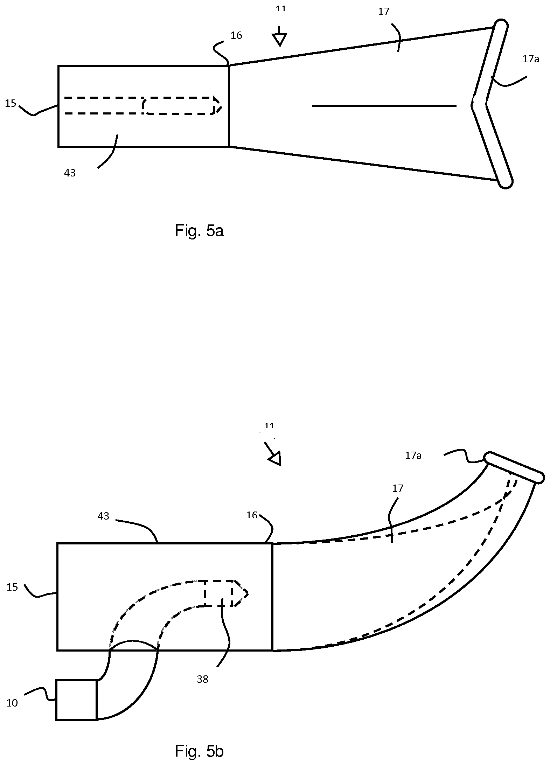

The exemplary embodiment of a spray head 11 for the spraying device 19 of figure 1a is shown in more detail in figures 5-5b. Figure 5 shows a perspective view of the spray head 11 with a sleeve-shaped housing 43 as the inlet to which a hose 10 provided with a foaming head 38 can be connected, a curved horn 17 with a substantially V-shaped spray nozzle 17a. The hose 10 and the fibre hose 15 are connected to the spray head 11 on the sleeve-like housing 43 of the spray head 11. The hose 10 opens with the foaming head 38 into the centre of the upstream part of the horn 17. Around the foaming head 38, the fibre hose 15 opens into the upstream part of the horn 17. The flow of fibres from the fibre hose 15 passes into the horn 17 substantially linearly, whilst the foam from the foaming head 38 fans out toward the wall of the horn 17 at an angle, in this case an angle of 45°. The flow of foam from the foaming head 38 thus enters the flow of fibres from the fibre hose 15 at an angle of 45°, so that the foam and the fibres will mix. Due to the good foam quality, the fibres will be relatively well surrounded with foam, and thus with adhesive. Once this has happened, the mixed foamy mass will flow through the horn 17 and exit it through the spray nozzle 17a.

Figure 5a shows a top plan view of the spray head 11. As can be inferred from said top plan view, the horn 17 of the spray head 11 spreads out, widthwise in this case. The figure also shows that the wall develops in the form of a V in the V-shaped spray nozzle 17a. Since the horn 17 spreads out in the form of a V, seen in the direction of flow of the foam from the mixing housing 16 to the spray nozzle 17a, the mixture of fibres and foam will fan out widthwise in the spray head under the influence of the centrifugal force and flow out of the spray head in a relatively wide cone. This is advantageous if material, such as foam, is to be sprayed from the spray head 11 onto a surface, because said surface can thus be coated more quickly whilst realising a flatter coating result.

Figure 5b is a side view of the spray head 11, which shows that the height of the horn 17 oriented transversely to the width of the horn 17 gradually decreases. Foam flowing through the horn 17 to the spray nozzle 17a accelerates in the illustrated spray head 11. Since the horn 17 blends substantially into a V shape, seen in the direction of flow of the foam from the round mixing housing 16 to the spray nozzle 17a, the mixture of fibres and foam will fan out over the width of the spray head under the influence of the centrifugal force and flow from the spray head in a relatively uniform cone. This is advantageous if material, such as foam, is to be sprayed from the spray head 11 onto a surface, because said surface can thus be coated more quickly whilst realising a flatter coating result.

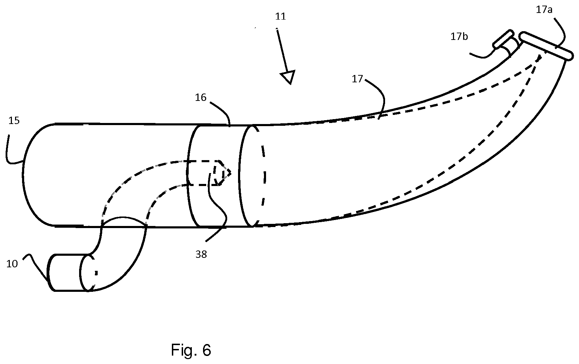

Figure 6 shows an alternative embodiment of a spray head for use in the device of figure 1a. The shape of the spray head is substantially the same as that of the spray head 11 shown in figures 5-5b. One difference is that a vent hole 17b is provided on the inward-facing wall of the horn 17, near the outflow end. This makes it possible to apply foam flowing through the spray nozzle 17a to the surface at a lower speed and with less turbulence. After all, transport air can escape through the vent hole 48, as a result of which less air will flow through the spray nozzle 17a. Another difference is the smaller angle of bend of the horn 17, a larger opening of the spray nozzle 17a and a less pronounced V-shape of the spray nozzle, so that the specific weight of the material sprayed onto the surface will be lower.

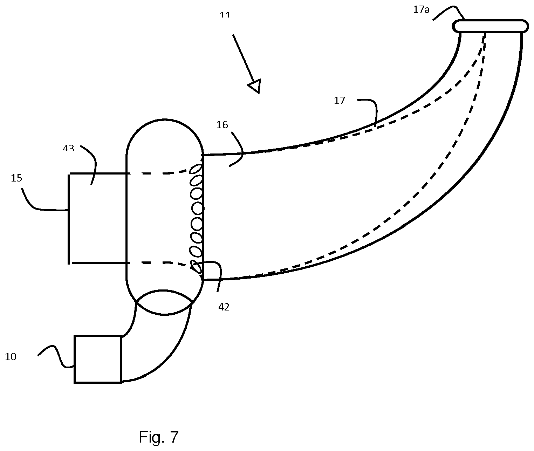

Figure 7 shows an alternative embodiment of a foaming head for use in the spraying device 19. Instead of having a central outflow for foam, this foaming head is provided with outflow openings near the outer circumference of the spray head. The foam flows at an angle toward the central axis of the horn, where fibres from the fibre store enter the spray head 11 via the fibre hose 15. The effect of such a foaming head is comparable to the effect of the foaming head of figure 4.

For the sake of completeness it is noted in this regard that a spray head as shown in figures 5 and/or 6 is also suitable for use as a spray head for non-foamy wet or dry material, such as mortar, paint, stucco, dry firewalls, powder, adhesive, mineral law materials, seeds, granulate and the like.

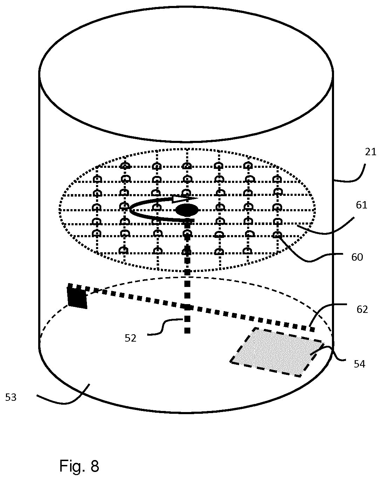

Considering now the schematic representation of a denester in the form of a casing 20 in figure 8, there is shown a hopper 21 in which a rotary shaft 52 driven by a driving mechanism (not shown in figure 8) can rotate. Near the bottom 53 of the hopper 21, a stirrer 62 connected to the rotary shaft 52 rotates. Disposed at the upper end of the rotary shaft 52 is a horizontally extending grid 61 in the form of a mesh. Said mesh has a mesh width geared to the substance to be denested; it may vary between 1 and 150 mm. In vertical direction, transversely to the plane, said mesh may be provided with a (varying) profile or with protrusions by means of which fibres can be denested more adequately and/or more quickly. Said profile varies from 0 to 200 mm, it is geared to the substance to be denested and the desired denesting speed. The thickness of the mesh is determined by the pressure on the surface and the force exerted on the mesh by the substance to be denested. In the case of a mesh diameter of 600 mm, a thickness of 3-4 mm usually suffices. The surface area of the mesh is determined by the diameter of the hopper 21 and the desired denesting speed. Located in the bottom 53 of the hopper 21 is an outlet 54, which opens into a cellular wheel sluice 63. At its bottom side, the cellular wheel sluice 63 opens with a delivery opening 55 into a hose 13, through which air is blown by a blowing device 12, and which blends into a fibre supply hose 15 downstream of the delivery opening 55.

In use, the open upper side of the hopper 21 is fed with bales 56 of compressed fibres or another compressed particulate material. As a result of the rotation of the grid 61, the grid 61 gradually scrapes fibre material from the underside of the bale 56, as it were, so that the fibres fall down relatively evenly in the hopper 21 under the grid. During their fall, the fibres are engaged by the stirrer 62, so that the fibres are additionally loosened. A second function of the stirrer 62 is to displace denested fibres in the direction of the outlet 54. Via the outlet 54, the fibres enter the cellular wheel sluice 63, which rotates about its axis as a result of rotation of the cells defined by the blades and the inner wall of the cellular wheel sluice 63 and thus transports fibres to the delivery opening in a metered manner. Said fibres subsequently fall through the delivery opening into the hose 13, where they are carried along in the direction of the mixing chamber 7 by an air flow generated by the blowing device 12.

A cellular wheel sluice for use in a blowing device according to the present invention can be configured in various types. A first type is a so-called blow-through cellular wheel sluice, in which air is blown parallel to the axis of rotation of the blade wheel through opposite side walls of the sluice. The cells defined by the rotating blades rotate past the outlet 54 and constantly supply new particles from the hopper. A second type is a conventional fall-through cellular wheel sluice having straight blades, in which the rotating cells transport particles in batches from the hopper to the delivery opening. A third type is a cellular wheel sluice having oblique blades, which operates on the basis of the second type but which delivers the particles gradually to delivery opening because the blades extend at an angle relative to the delivery opening from a leading edge to a trailing edge.

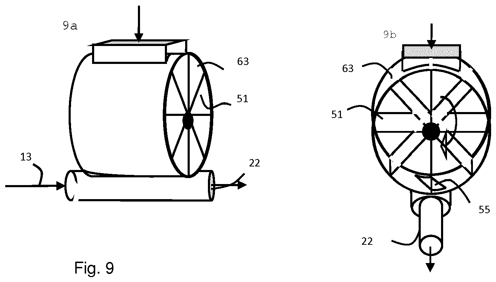

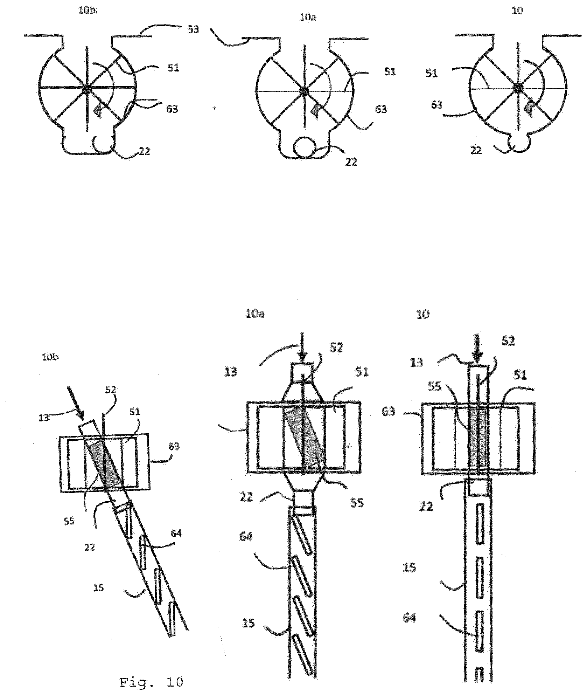

A fourth type, which is shown in figures 9a and 10b, is based on the known second type, to be true, but it is new in that the delivery opening extends at an angle relative to the axis of rotation of the blade wheel provided with the straight blades. Because of the oblique orientation of the delivery opening, the same effect is achieved as with the third type, but in a manner which is much easier to realise. As it is, a blade does not pass the opening instantaneously, as is the case with the second type, but gradually, as is the case with the third type. Since the delivery opening extends at an angle relative to the axis of rotation and the straight blades, the blades will pass the delivery opening gradually, so that a gradual delivery of particles through the delivery opening to the fibre hose is possible.

An alternative to achieving the effect of the third or the fourth type of cellular wheel sluice, which is shown in figure 10b, can be realised by the relative orientation of a cellular wheel sluice of the second type and the fibre hose. When a cellular wheel sluice of the second type is used, a discharge channel, the fibre hose in the case of the invention, is oriented at an angle relative to the delivery opening at the bottom side of the cellular wheel sluice. The particles are in that case presented to the fibre hose in batches, to be true, but as a result of the oblique orientation of the fibre holes, the fibres falling into the fibre hose are orientated at an angle relative to the longitudinal axis of the hose, as a result of which the fibres are spread relatively well in the longitudinal direction of the hose. By way of illustration the distribution of fibres over the fibre hose when types, 2, 4 and 5 are used is shown in figures 10, 10a and 10b, respectively. From this it can be inferred that the amount of fibres is distributed much more evenly over the fibre hose, seen in the conveying direction T in figures 10a and 10b, than with the conservative arrangement of the second type corresponding to figure 10. Using a cellular wheel sluice of the third type it is possible to achieve a comparable result, to be true, but the adaptations of the cellular wheel sluice (oblique blades properly abutting against the inner wall) are more complex, more expensive and require more maintenance than in the case of an oblique delivery opening or an oblique placement of the sluice above a discharge channel or the altered relative orientation as used in the fourth type of cellular wheel sluice.

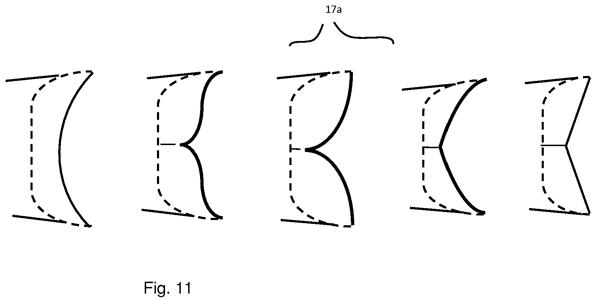

Figure 11, to conclude, shows a non-limitative number of examples of embodiments of a part of the spray nozzle corresponding to the outside curve of a curved horn, in which the edge portion on the side of the outside curve is drawn in bold lines for the sake of clarity. In figure 11, the opposite edge portions (associated with an inside curve) are drawn substantially straight in all cases, but the opposite edge portions may also extend in the form of an arc or substantially parallel to the edge portion that is drawn in bold lines.

In the illustrated figures and the description, the present invention has been explained with reference to a limited number of embodiments. It will be understood that neither the description of the figures nor the drawings have any limitative effect on the scope of the present invention, which is defined in the appended claims. As also appears from the description and the claims, the individual parts of the spraying device can also be used with other devices. The individual parts may also be configured differently. Thus, a gas other than air may be supplied under pressure. Instead of using an adhesive (solution) it is possible to use water or another binder, or another material to be foamed by means of a gas. The flow resistance can be provided by an alternative valve, preferably a valve whose resistance increases proportionally to the pressure at which fluid is supplied to the valve. The mixing chamber may form an integral part of the hose, with the air line and the adhesive solution line preferably flowing together at an angle relative to each other in the hose.

## Claims

1. A supply device designed for supplying a fluid to a mixing chamber (7) of a spraying device (19) by means of which, in use, a layer of coating material is applied to a surface, wherein the supply device comprises a first store (5) of base material, the mixing chamber (7), a first supply channel (2d) providing a supply route from the first store (5) of base material to the mixing chamber (7) and provided with a first flow resistor (27) which prevents flow in a desired direction of flow from the first store (5) of base material in the form of a fluid to the mixing chamber (7) until the pressure difference between the first supply channel (2d) and the mixing chamber (7) exceeds a first specific threshold value, and which blocks flow of fluid against the desired direction of flow, and wherein the supply device comprises a second store (8a) of base material, a second supply channel (9) providing a supply route from the second store of base material to the mixing chamber (7) provided with a second flow resistor (28) which prevents flow in a desired direction of flow from the second store of base material in the form of fluid to the mixing chamber (7) until a pressure difference between the second supply channel (9) and the mixing chamber (7) exceeds a specific second threshold value and which blocks flow of fluid against the desired direction of flow, wherein the first threshold value for the pressure difference between the first supply channel (2d) from a first base material supply line and the mixing chamber (7) is at least 10 kPa and wherein the second threshold value for the pressure difference between the second supply channel (9) from a second supply line and the mixing chamber (7) is at least 10 kPa.

2. A supply device according to claim 1, **characterised in that** at least one flow resistor (27, 28) is of the autonomous operating type.

3. A supply device according to claim 2, **characterised in that** the flow resistor (27, 28) in the first and/or the second supply channel (2d, 9) is configured as a valve of a bicycle tyre, wherein the valve is preferably provided with a valve hose, which comprises and is preferably made of a resilient material and wherein said resilient material is preferably rubber or a rubbery material.

4. A spraying device comprising a supply device according to one of claims 1-3 by means of which, in use, a coating layer is applied to a surface, comprising:
- a binder solution supply device comprising the first supply channel (2d) by means of which, in use, a fluid binder solution, being the base material of the first store (5) of base material, is supplied under pressure from a binder solution store, being the first store (5) of base material to the mixing chamber (7),
- a gas supply device comprising the second supply channel (9), and by means of which, in use, a gaseous fluid is supplied under pressure from a gas store, being the second store of base material to the mixing chamber (7),
- the mixing chamber having a first inlet opening, to which the first base material supply line, which comprises the first supply channel (2d), is connected, and a second inlet opening, to which the second base material supply line, being the gas supply channel (9), is connected,
- a hose (10) disposed downstream of the mixing chamber (7) and being communicatively connected thereto, which hose opens into a mixing housing (16) of a spray head (11),
- a third supply device (15) for coating material which, in use, mainly supplies loose particles of coating material to the mixing housing (16), and
- a horn (17) disposed downstream of the mixing housing (16) and being communicatively connected thereto, which horn (17) comprises a spray nozzle (17a), through which, in use, a mass mixed in the spraying device is applied to a surface.

5. A method for applying a coating layer to a surface, comprising the steps of:
a) supplying a fluid binder solution under pressure from a binder solution store (5) as a first store to a mixing chamber (7) via a binder solution supply line comprising a binder supply channel (2d) as a first supply channel,
b) supplying a gaseous fluid under pressure from a gas store to the mixing chamber (7) via a gas supply line comprising a gas supply channel (9),
c) mixing the binder solution and the gaseous fluid into a foam in the mixing chamber (7),
d) causing the foam to flow through a hose (10) which is communicatively connected to the mixing chamber (7), which hose opens into a mixing housing (16) of a spray head (11),
e) supplying loose particles of coating material to the mixing housing (16) via a third supply device (15) for coating material,
f) mixing the supplied foam and the supplied coating material into a binder coating material mixture in the mixing housing (16) and spraying the binder coating material mixture from the mixing housing through a spray nozzle (17a), via a horn (17) of a spray head (11), onto a surface to be coated,
wherein a first flow resistor (27) is provided between the binder solution store (5) and the mixing chamber (7) and/or a second flow resistor (28) is provided between the gas store and the mixing chamber, which respective flow resistor on the one hand prevents flow in a desired direction of flow from the respective fluid store to the mixing chamber for the fluid binder solution in step a) and/or for the gaseous fluid in step b) until the pressure difference between the respective supply line and the mixing chamber (7) exceeds a threshold value of at least 10 kPa, and which on the other hand blocks flow of fluid against the desired flow direction upon or after termination of the application process.

6. Spraying device according to claim 4, further comprising a foaming head (38) and the mixing housing (16) by means of which foaming head (38), in use, a coating layer is applied to a surface, wherein at least one additive outlet (22) and a foam outlet (23) provided with two or more outflow openings (42) open into the mixing housing (16), which outflow openings are oriented so that, in use, foam is driven into the mixing housing (16) from at least a larger part of the outflow openings at an acute angle relative to a main direction of flow of the loose particles from the outflow openings.

7. A spraying device according to claim 6, wherein the at least one additive outlet (22) for coating material and the foam outlet (23) provided with two or more outflow openings open into the mixing housing (16), which outflow openings are so configured and oriented that, in use, the foam is driven from at least a larger part of the outflow openings into the mixing housing (16) at an acute angle relative to the main direction of flow of the coating material from the outflow openings.

8. A method for applying a coating layer to a surface according to claim 5, wherein the foam flows from a foam outlet (23) provided with two or more outflow openings of a foaming head (38) and that additive flows from at least one additive outlet (22) for coating material into the mixing housing (16), wherein the foam flows from the outflow openings in a direction of flow that extends at an acute angle relative to a main direction of flow of the additive.

9. A method according to claim 5 adapted for causing a foam flow and an additive flow to flow together in the substantially closed mixing housing (16) for the purpose of mixing the two together, wherein the foam flows from a foam outlet (23) provided with two or more outflow openings into the mixing housing (16) and that additive flows from at least one additive outlet (22) into the mixing housing (16), wherein the foam flows from the outflow openings of the foam outlet (23) into the mixing housing (16) in a direction of flow that extends at an acute angle relative to a main direction of flow of the additive.

10. A spraying device according to claim 6
wherein the spray head (11) comprises the horn (17), the horn (17) having a cross-section which tapers from an at least substantially circular shape to a substantially V-shape from a foam inlet in the direction of the spray nozzle (17a), wherein the horn (17) has a central axis which is curved in the direction of the spray nozzle (17a), and wherein the cross-sectional area of the horn (17) decreases in the direction of the spray nozzle (17a).

11. A method for applying a coating layer to a surface according to claim 5, 8 or 9 **characterised in that** in step f) the binder-coating material mixture is sprayed onto the surface by means of the spray head (11) comprising the horn (17), the horn (17) having a cross-section which tapers from an at least substantially circular shape to a substantially V-shape from a foam inlet in the direction of the spray nozzle (17a), wherein the horn (17) has a central axis which is curved in the direction of the spray nozzle (17a), and wherein the cross-sectional area of the horn (17) decreases in the direction of the spray nozzle (17a).

12. A method for applying a coating layer to a surface according to claim 5, using a spraying device according to claim 10, wherein the material flows into the at least substantially circular inlet in the horn (17) of the spray head (11), wherein the flow of material is spread and flattened against an inner wall of the outside curve of the horn (17) into a flow having a V-shaped cross-section during its passage through the horn (17).

## Patentansprüche

1. Zufuhrvorrichtung, die zur Zuführung eines Fluids zu einer Mischkammer (7) einer Sprühvorrichtung (19) ausgelegt ist, mittels derer bei der Benutzung eine Schicht eines Beschichtungsmaterials auf eine Oberfläche aufgebracht wird, wobei die Zufuhrvorrichtung einen ersten Vorrat (5) an Basismaterial, die Mischkammer (7), und einen ersten Zufuhrkanal (2d) aufweist, der einen Zuführungsweg vom ersten Vorrat (5) des Basismaterials zur Mischkammer (7) bereitstellt und einen ersten Strömungswiderstand (27) aufweist, der eine Strömung in einer gewünschten Strömungsrichtung vom ersten Vorrat (5) an Basismaterial in Form eines Fluids zur Mischkammer (7) verhindert, bis der Druckunterschied zwischen dem ersten Zufuhrkanal (2d) und der Mischkammer (7) einen ersten spezifischen Schwellenwert überschreitet, und der eine Fluidströmung entgegen der gewünschten Strömungsrichtung blockiert, und wobei die Zufuhrvorrichtung einen zweiten Vorrat (8a) an Basismaterial umfasst, wobei ein zweiter Zufuhrkanal (9) einen Zuführungsweg vom zweiten Vorrat des Basismaterials zur Mischkammer (7) bereitstellt, der einen zweiten Strömungswiderstand (28) aufweist, der eine Strömung in einer gewünschten Strömungsrichtung vom zweiten Vorrat an Basismaterial in Form eines Fluids zur Mischkammer (7) verhindert, bis ein Druckunterschied zwischen dem zweiten Zufuhrkanal (9) und der Mischkammer (7) einen spezifischen zweiten Schwellenwert überschreitet, und der eine Fluidströmung entgegen der gewünschten Strömungsrichtung blockiert, wobei der erste Schwellenwert für den Druckunterschied zwischen dem ersten Zufuhrkanal (2d) von einer ersten Basismaterialzufuhrleitung und der Mischkammer (7) mindestens 10 kPa beträgt und wobei der zweite Schwellenwert für den Druckunterschied zwischen dem zweiten Zufuhrkanal (9) von einer zweiten Zufuhrleitung und der Mischkammer (7) mindestens 10 kPa beträgt.

2. Zufuhrvorrichtung nach Anspruch 1, **dadurch gekennzeichnet, dass** mindestens ein Strömungswiderstand (27, 28) von der autonom betriebenen Art ist.

3. Zufuhrvorrichtung nach Anspruch 2, **dadurch gekennzeichnet, dass** der Strömungswiderstand (27, 28) im ersten und/oder zweiten Zufuhrkanal (2d, 9) als ein Ventil oder ein Fahrradreifen ausgelegt ist, wobei das Ventil vorzugsweise einen Ventilschlauch aufweist, der ein elastisches Material umfasst und vorzugsweise daraus besteht und wobei das elastische Material vorzugsweise Gummi oder ein gummiartiges Material ist.

4. Sprühvorrichtung, umfassend eine Zufuhrvorrichtung nach einem der Ansprüche 1-3, mittels derer bei der Benutzung eine Überzugsschicht auf eine Oberfläche aufgebracht wird, umfassend:
- eine Zufuhrvorrichtung für Bindemittellösung, umfassend den ersten Zufuhrkanal (2d), mittels dessen bei der Benutzung eine flüssige Bindemittellösung, bei der es sich um das Basismaterial des ersten Vorrats (5) an Basismaterial handelt, unter Druck von einem Bindemittellösungsvorrat, bei dem es sich um den ersten Vorrat (5) an Basismaterial handelt, der Mischkammer (7) zugeführt wird,
- eine Gaszufuhrvorrichtung, umfassend den zweiten Zufuhrkanal (9), und mittels dessen bei der Benutzung ein gasförmiges Fluid unter Druck von einem Gasvorrat, bei dem es sich um den zweiten Vorrat an Basismaterial handelt, der Mischkammer (7) zugeführt wird,
- wobei die Mischkammer eine erste Einlassöffnung, mit der die erste Basismaterialzufuhrleitung, die den ersten Zufuhrkanal (2d) umfasst, verbunden ist, und eine zweite Einlassöffnung, mit der die zweite Basismaterialzufuhrleitung, bei der es sich um den Gaszufuhrkanal (9) handelt, verbunden ist, aufweist,
- einen Schlauch (10), der stromabwärts von der Mischkammer (7) angeordnet ist und in kommunikativer Verbindung damit steht, wobei der Schlauch in ein Mischgehäuse (16) eines Sprühkopfes (11) mündet,
- eine dritte Zufuhrvorrichtung (15) für Beschichtungsmaterial, die bei der Benutzung hauptsächlich lose Partikel von Beschichtungsmaterial dem Mischgehäuse (16) zuführt, und
- ein Horn (17), das stromabwärts vom Mischgehäuse (16) angeordnet ist und damit in kommunikativer Verbindung steht, wobei das Horn (17) eine Sprühdüse (17a) umfasst, durch die bei der Benutzung eine in der Sprühvorrichtung gemischte Masse auf eine Oberfläche aufgebracht wird.

5. Verfahren zum Aufbringen einer Überzugsschicht auf eine Oberfläche, umfassend die folgenden Schritte:
a) Zuführen einer flüssigen Bindemittellösung unter Druck von einem Bindemittellösungsvorrat (5) als ein erster Vorrat zu einer Mischkammer (7) über eine Zufuhrleitung für Bindemittellösung, die einen Bindemittelzufuhrkanal (2d) als einen ersten Zufuhrkanal umfasst,
b) Zuführen eines gasförmigen Fluids unter Druck von einem Gasvorrat zur Mischkammer (7) über eine Gaszufuhrleitung, die einen Gaszufuhrkanal (9) umfasst,
c) Mischen der Bindemittellösung und des gasförmigen Fluids in einen Schaum in der Mischkammer (7),
d) Verursachen, dass der Schaum durch einen Schlauch (10) fließt, der mit der Mischkammer (7) in kommunikativer Verbindung steht, wobei der Schlauch in ein Mischgehäuse (16) eines Sprühkopfes (11) mündet,
e) Zuführen loser Partikel von Beschichtungsmaterial zum Mischgehäuse (16) über eine dritte Zufuhrvorrichtung (15) für Beschichtungsmaterial,
f) Mischen des zugeführten Schaums und des zugeführten Beschichtungsmaterials in ein Bindemittelbeschichtungsmaterialgemisch im Mischgehäuse (16) und Sprühen des Bindemittelbeschichtungsmaterialgemischs vom Mischgehäuse durch eine Sprühdüse (17a), über ein Horn (17) eines Sprühkopfes (11) auf eine zu beschichtende Oberfläche,
wobei ein erster Strömungswiderstand (27) zwischen dem Bindemittellösungsvorrat (5) und der Mischkammer (7) bereitgestellt ist und/oder wobei ein zweiter Strömungswiderstand (28) zwischen dem Gasvorrat und der Mischkammer bereitgestellt ist, wobei der jeweilige Strömungswiderstand einerseits eine Strömung in einer gewünschten Strömungsrichtung vom jeweiligen Fluidvorrat zur Mischkammer für die flüssige Bindemittellösung in Schritt a) und/oder für das gasförmige Fluid in Schritt b) verhindert, bis der Druckunterschied zwischen der jeweiligen Zufuhrleitung und der Mischkammer (7) einen Schwellenwert von mindestens 10 kPa überschreitet, und der andererseits eine Fluidströmung entgegen der gewünschten Strömungsrichtung bei oder nach Ende des Aufbringungsverfahrens blockiert.

6. Sprühvorrichtung nach Anspruch 4, ferner umfassend einen Aufschäumkopf (38) und das Mischgehäuse (16), wobei mittels des Aufschäumkopfes (38) bei der Benutzung eine Überzugsschicht auf eine Oberfläche aufgebracht wird, wobei mindestens ein Additivauslass (22) und ein Schaumauslass (23), der zwei oder mehr Ausströmöffnungen (42) aufweist, in das Mischgehäuse (16) münden, wobei die Ausströmöffnungen so orientiert sind, dass bei der Benutzung Schaum in das Mischgehäuse (16) von mindestens einem größeren Teil der Ausströmöffnungen in einem spitzen Winkel bezüglich einer Hauptströmungsrichtung der losen Partikel von den Ausströmöffnungen getrieben wird.

7. Sprühvorrichtung nach Anspruch 6, wobei der mindestens eine Additivauslass (22) für Beschichtungsmaterial und der Schaumauslass (23), der zwei oder mehr Ausströmöffnungen aufweist, in das Mischgehäuse (16) münden, wobei die Ausströmöffnungen so ausgelegt und orientiert sind, dass der Schaum bei der Benutzung von mindestens einem größeren Teil der Ausströmöffnungen in das Mischgehäuse (16) in einem spitzen Winkel bezüglich der Hauptströmungsrichtung des Beschichtungsmaterials von den Ausströmöffnungen getrieben wird.

8. Verfahren zum Aufbringen einer Überzugsschicht auf eine Oberfläche nach Anspruch 5, wobei der Schaum von einem Schaumauslass (23), der zwei oder mehr Ausströmöffnungen eines Aufschäumkopfes (38) aufweist, fließt und Additiv von mindestens einem Additivauslass (22) für Beschichtungsmaterial in das Mischgehäuse (16) fließt, wobei der Schaum von den Ausströmöffnungen in einer Strömungsrichtung fließt, die sich in einem spitzen Winkel bezüglich einer Hauptströmungsrichtung des Additivs erstreckt.

9. Verfahren nach Anspruch 5, das dazu angepasst ist, eine Schaumströmung und eine Additivströmung zu verursachen, damit diese beiden zusammen in dem im Wesentlichen geschlossenen Mischgehäuse (16) fließen, um diese zu vermischen, wobei der Schaum von einem Schaumauslass (23), der zwei oder mehr Ausströmöffnungen aufweist, in das Mischgehäuse (16) fließt und Additiv von mindestens einem Additivauslass (22) in das Mischgehäuse (16) fließt, wobei der Schaum von den Ausströmöffnungen des Schaumauslasses (23) in das Mischgehäuse (16) in einer Strömungsrichtung fließt, die sich in einem spitzen Winkel bezüglich einer Hauptströmungsrichtung des Additivs erstreckt.

10. Sprühvorrichtung nach Anspruch 6,
wobei der Sprühkopf (11) das Horn (17) umfasst, wobei das Horn (17) einen Querschnitt aufweist, der sich von einer zumindest im Wesentlichen kreisförmigen Gestalt in eine im Wesentlichen V-förmige Gestalt von einem Schaumeinlass in Richtung der Sprühdüse (17a) verjüngt, wobei das Horn (17) eine Mittelachse aufweist, die in der Richtung der Sprühdüse (17a) gebogen ist, und wobei die Querschnittsfläche des Horns (17) in Richtung der Sprühdüse (17a) abnimmt.

11. Verfahren zum Aufbringen einer Überzugsschicht auf eine Oberfläche nach Anspruch 5, 8 oder 9, **dadurch gekennzeichnet, dass** in Schritt f) das Bindemittelbeschichtungsmaterialgemisch mit dem das Horn (17) umfassenden Sprühkopf (11) auf die Oberfläche gesprüht wird, wobei das Horn (17) einen Querschnitt aufweist, der sich von einer zumindest im Wesentlichen kreisförmigen Gestalt in eine im Wesentlichen V-förmige Gestalt von einem Schaumeinlass in Richtung der Sprühdüse (17a) verjüngt, wobei das Horn (17) eine Mittelachse aufweist, die in der Richtung der Sprühdüse (17a) gebogen ist, und wobei die Querschnittsfläche des Horns (17) in Richtung der Sprühdüse (17a) abnimmt.

12. Verfahren zum Aufbringen einer Überzugsschicht auf eine Oberfläche nach Anspruch 5, unter Verwendung einer Sprühvorrichtung nach Anspruch 10, wobei das Material in den zumindest im Wesentlichen kreisförmigen Einlass im Horn (17) des Sprühkopfes (11) fließt, wobei die Materialströmung ausgebreitet und gegen eine Innenwand der Außenbiegung des Horns (17) in eine Strömung abgeflacht wird, die einen V-förmigen Querschnitt während ihres Durchleitens durch das Horn (17) aufweist.

## Revendications

1. Dispositif d'alimentation conçu pour fournir un fluide à une chambre de mélange (7) d'un dispositif de pulvérisation (19) au moyen duquel, en cours d'utilisation, une couche de matériau de revêtement est appliquée à une surface, où le dispositif d'alimentation comprend un premier réservoir (5) de matériau de base, la chambre de mélange (7), un premier canal d'alimentation (2d) fournissant une voie d'alimentation du premier réservoir (5) de matériau de base à la chambre de mélange (7) et pourvu d'une première résistance d'écoulement (27) qui empêche l'écoulement dans une direction d'écoulement souhaitée du premier réservoir (5) de matériau de base sous forme de fluide à la chambre de mélange (7) jusqu'à ce que la différence de pression entre le premier canal d'alimentation (2d) et la chambre de mélange (7) dépasse une première valeur seuil spécifique, et qui bloque l'écoulement de fluide contre la direction d'écoulement souhaitée, et où le dispositif d'alimentation comprend un deuxième réservoir (8a) de matériau de base, un deuxième canal d'alimentation (9) fournissant une voie d'alimentation du deuxième réservoir de matériau de base à la chambre de mélange (7) pourvu d'une deuxième résistance d'écoulement (28) qui empêche l'écoulement dans une direction d'écoulement souhaitée du deuxième réservoir de matériau de base sous forme de fluide à la chambre de mélange (7) jusqu'à ce qu'une différence de pression entre le deuxième canal d'alimentation (9) et la chambre de mélange (7) dépasse une deuxième valeur seuil spécifique et qui bloque l'écoulement de fluide contre la direction d'écoulement souhaitée, où la première valeur seuil pour la différence de pression entre le premier canal d'alimentation (2d) d'une première conduite d'alimentation en matériau de base et la chambre de mélange (7) est d'au moins 10 kPa et où la deuxième valeur seuil pour la différence de pression entre le deuxième canal d'alimentation (9) d'une deuxième conduite d'alimentation et la chambre de mélange (7) est d'au moins 10 kPa.

2. Dispositif d'alimentation selon la revendication 1, **caractérisé en ce qu'**au moins une résistance d'écoulement (27, 28) est du type à fonctionnement autonome.

3. Dispositif d'alimentation selon la revendication 2, **caractérisé en ce que** la résistance d'écoulement (27, 28) dans le premier et/ou le deuxième canal d'alimentation (2d, 9) est configurée comme une soupape d'un pneu de vélo, où la soupape est de préférence pourvue d'un tuyau de soupape, qui comprend et qui est de préférence réalisé en un matériau élastique et où ledit matériau élastique est de préférence du caoutchouc ou un matériau caoutchouteux.

4. Dispositif de pulvérisation comprenant un dispositif d'alimentation selon l'une des revendications 1 à 3 au moyen duquel, en cours d'utilisation, une couche de revêtement est appliquée à une surface, comprenant :
- un dispositif d'alimentation en solution de liant comprenant le premier canal d'alimentation (2d) au moyen duquel, en cours d'utilisation, une solution de liant fluide, qui est le matériau de base du premier réservoir (5) de matériau de base, est fournie sous pression d'un réservoir de solution de liant, qui est le premier réservoir (5) de matériau de base à la chambre de mélange (7),
- un dispositif d'alimentation en gaz comprenant le deuxième canal d'alimentation (9), et au moyen duquel, en cours d'utilisation, un fluide gazeux est fourni sous pression d'un réservoir de gaz, qui est le deuxième réservoir de matériau de base à la chambre de mélange (7),
- la chambre de mélange ayant une première ouverture d'entrée, à laquelle la première conduite d'alimentation en matériau de base, qui comprend le premier canal d'alimentation (2d), est reliée, et une deuxième ouverture d'entrée, à laquelle la deuxième conduite d'alimentation en matériau de base, qui est le canal d'alimentation en gaz (9), est reliée,
- un tuyau (10) disposé en aval de la chambre de mélange (7) et qui est relié en communication à celle-ci, lequel tuyau débouche dans un boîtier de mélange (16) d'une tête de pulvérisation (11),
- un troisième dispositif d'alimentation (15) pour un matériau de revêtement qui, en cours d'utilisation, fournit principalement des particules libres de matériau de revêtement au boîtier de mélange (16), et
- une corne (17) disposée en aval du boîtier de mélange (16) et qui est reliée en communication à celui-ci, laquelle corne (17) comprend une buse de pulvérisation (17a), à travers laquelle, en cours d'utilisation, une masse mélangée dans le dispositif de pulvérisation est appliquée à une surface.

5. Procédé pour appliquer une couche de revêtement à une surface, comprenant les étapes consistant :
a) à fournir une solution de liant fluide sous pression d'un réservoir de solution de liant (5) en tant que premier réservoir à une chambre de mélange (7) par l'intermédiaire d'une conduite d'alimentation en solution de liant comprenant un canal d'alimentation en liant (2d) en tant que premier canal d'alimentation,
b) à fournir un fluide gazeux sous pression d'un réservoir de gaz à la chambre de mélange (7) par l'intermédiaire d'une conduite d'alimentation en gaz comprenant un canal d'alimentation en gaz (9),
c) à mélanger la solution de liant et le fluide gazeux en une mousse dans la chambre de mélange (7),
d) à amener la mousse à s'écouler à travers un tuyau (10) qui est relié en communication à la chambre de mélange (7), lequel tuyau débouche dans un boîtier de mélange (16) d'une tête de pulvérisation (11),
e) à fournir des particules libres de matériau de revêtement au boîtier de mélange (16) par l'intermédiaire d'un troisième dispositif d'alimentation (15) pour le matériau de revêtement,
f) à mélanger la mousse fournie et le matériau de revêtement fourni en un mélange liant-matériau de revêtement dans le boîtier de mélange (16) et à pulvériser le mélange liant-matériau de revêtement du boîtier de mélange à travers une buse de pulvérisation (17a), par l'intermédiaire d'une corne (17) d'une tête de pulvérisation (11), sur une surface à revêtir,
dans lequel une première résistance d'écoulement (27) est prévue entre le réservoir de solution de liant (5) et la chambre de mélange (7) et/ou une deuxième résistance d'écoulement (28) est prévue entre le réservoir de gaz et la chambre de mélange, laquelle résistance d'écoulement respective d'une part, empêche l'écoulement dans une direction d'écoulement souhaitée du réservoir de fluide respectif à la chambre de mélange pour la solution de liant fluide dans l'étape a) et/ou pour le fluide gazeux dans l'étape b) jusqu'à ce que la différence de pression entre la conduite d'alimentation respective et la chambre de mélange (7) dépasse une valeur seuil d'au moins 10 kPa, et qui d'autre part bloque l'écoulement de fluide contre la direction d'écoulement souhaitée pendant ou après la fin du procédé d'application.

6. Dispositif de pulvérisation selon la revendication 4, comprenant en outre une tête de moussage (38) et le boîtier de mélange (16) au moyen de cette tête de moussage (38), en cours d'utilisation, une couche de revêtement est appliquée à une surface, où au moins une sortie d'additif (22) et une sortie de mousse (23) pourvue de deux ouvertures d'écoulement à la sortie (42) ou plus débouchent dans le boîtier de mélange (16), lesquelles ouvertures d'écoulement à la sortie sont orientées de sorte qu'en cours d'utilisation, la mousse soit entraînée dans le boîtier de mélange (16) à partir d'au moins une plus grande partie des ouvertures d'écoulement à la sortie selon un angle aigu par rapport à une direction principale d'écoulement des particules libres à partir des ouvertures d'écoulement à la sortie.

7. Dispositif de pulvérisation selon la revendication 6, dans lequel l'au moins une sortie d'additif (22) pour le matériau de revêtement et la sortie de mousse (23) pourvue de deux ouvertures d'écoulement à la sortie ou plus débouchent dans le boîtier de mélange (16), lesquelles ouvertures d'écoulement à la sortie sont configurées et orientées de sorte qu'en cours d'utilisation, la mousse soit entraînée à partir d'au moins une plus grande partie des ouvertures d'écoulement à la sortie dans le boîtier de mélange (16) selon un angle aigu par rapport à la direction principale d'écoulement du matériau de revêtement à partir des ouvertures d'écoulement à la sortie.

8. Procédé pour appliquer une couche de revêtement à une surface selon la revendication 5, dans lequel la mousse s'écoule à partir d'une sortie de mousse (23) pourvue de deux ouvertures d'écoulement à la sortie ou plus d'une tête de moussage (38) et cet additif s'écoule à partir d'au moins une sortie d'additif (22) pour le matériau de revêtement dans le boîtier de mélange (16), où la mousse s'écoule à partir des ouvertures d'écoulement à la sortie dans une direction d'écoulement qui s'étend selon un angle aigu par rapport à une direction principale d'écoulement de l'additif.

9. Procédé selon la revendication 5, adapté pour amener un flux de mousse et un flux d'additif à s'écouler ensemble dans le boîtier de mélange essentiellement fermé (16) dans le but de mélanger les deux ensemble, où la mousse s'écoule à partir d'une sortie de mousse (23) pourvue de deux ouvertures d'écoulement à la sortie ou plus dans le boîtier de mélange (16) et cet additif s'écoule à partir d'au moins une sortie d'additif (22) dans le boîtier de mélange (16), où la mousse s'écoule à partir des ouvertures d'écoulement à la sortie de la sortie de mousse (23) dans le boîtier de mélange (16) dans une direction d'écoulement qui s'étend selon un angle aigu par rapport à une direction principale d'écoulement de l'additif.

10. Dispositif de pulvérisation selon la revendication 6
dans lequel la tête de pulvérisation (11) comprend la corne (17), la corne (17) ayant une section transversale qui s'effile d'une forme au moins essentiellement circulaire à une forme essentiellement en V à partir d'une entrée de mousse dans la direction de la buse de pulvérisation (17a), dans lequel la corne (17) a un axe central qui est incurvé dans la direction de la buse de pulvérisation (17a), et dans lequel la surface en coupe transversale de la corne (17) diminue dans la direction de la buse de pulvérisation (17a).

11. Procédé pour appliquer une couche de revêtement à une surface selon la revendication 5, 8 ou 9 **caractérisé en ce que**, dans l'étape f), le mélange liant-matériau de revêtement est pulvérisé sur la surface au moyen de la tête de pulvérisation (11) comprenant la corne (17), la corne (17) ayant une section transversale qui s'effile d'une forme au moins essentiellement circulaire à une forme essentiellement en V à partir d'une entrée de mousse dans la direction de la buse de pulvérisation (17a), dans lequel la corne (17) a un axe central qui est incurvé dans la direction de la buse de pulvérisation (17a), et dans lequel la surface en coupe transversale de la corne (17) diminue dans la direction de la buse de pulvérisation (17a).

12. Procédé pour appliquer une couche de revêtement à une surface selon la revendication 5, en utilisant un dispositif de pulvérisation selon la revendication 10, dans lequel le matériau s'écoule dans l'entrée au moins essentiellement circulaire dans la corne (17) de la tête de pulvérisation (11), où le flux de matériau est étalé et aplati contre une paroi interne de la courbe extérieure de la corne (17) en un flux ayant une section transversale en forme de V lors de son passage à travers la corne (17).
